# EUROPÄISCHE PATENTSCHRIFT

(11) **EP 2 777 850 B1**
(45) Veröffentlichungstag und Bekanntmachung des Hinweises auf die Patenterteilung: **12.08.2015**
(21) Anmeldenummer: 14160131.0
(22) Anmeldetag: 14.03.2014
(51) Int. Cl.: B23B 31/177

(54) **Spann- oder Greifeinrichtung**
Clamping or gripping device
Dispositif de serrage ou de préhension

(30) Priorität: 14.03.2013 DE 202013002445 U
(43) Veröffentlichungstag der Anmeldung: 17.09.2014
(73) Patentinhaber: Schunk GmbH & Co. KG Spann- und Greiftechnik, 74348 Lauffen am Neckar (DE)
(72) Erfinder: Übele, André, D-71546 Aspach (DE)
(74) Vertreter: Albrecht, Ralf

(56) Entgegenhaltungen:
- EP-A1- 1 184 112
- EP-A2- 1 886 751
- WO-A1-2009/093563
- DE-A1- 19 836 912
- DE-C- 408 900
- GB-A- 1 381 146
- GB-A- 2 178 984

## Beschreibung

Die vorliegende Erfindung betrifft eine Spann- oder Greifeinrichtung gemäß dem Oberbegriff der Ansprüche 1 und 7 mit einem Grundkörper aus einem formsteifen Material, der eine Längsachse definiert, mehreren Spannbacken, die an dem Grundkörper radial in Bezug auf die Längsachse bewegbar gehalten sind, und einem zumindest teilweise hohl ausgebildeten Spannkolben, welcher an dem Grundkörper axial zwischen einer hinteren und einer vorderen Endstellung bewegbar gehalten ist und die Spannbacken zumindest teilweise umgreift, wobei die Spannbacken und der Spannkolben miteinander in der Weise gekoppelt sind, dass eine Axialbewegung des Spannkolbens in eine Radialbewegung der Spannbacken umgesetzt wird, und wobei ein Stellantrieb zur Betätigung des Spannkolbens vorgesehen ist. Eine derartige Einrichtung ist aus dem Dokument DE 408 900 C bekannt.

Spann- oder Greifeinrichtung dieser Art sind bekannt und werden insbesondere als Präzisions-Spannfutter zum Schleifen von Werkzeugen eingesetzt. Von der Anmelderin werden derartige Präzisions-Spannfutter unter der Marke Prismo vertrieben. Diese Spannfutter umfassen einen Grundkörper aus einem formsteifen Material, der eine zur vorderen Stirnfläche des Grundkörpers offene, zentrale Aufnahme aufweist, die eine Längsachse des Spannfutters definiert. In der zentralen Aufnahme sind mehrere, bei den Prismo-Spanneinrichtungen der Anmelderin genau fünf, Spannbacken angeordnet und radial in Bezug auf die Längsachse des Spannfutters bewegbar gehalten. Weiterhin besitzen die bekannten Spannfutter einen zumindest teilweise hohl ausgebildeten Spannkolben, welcher in der zentralen Aufnahme des Grundkörpers platziert und axial zwischen einer hinteren und einer vorderen Endstellung bewegbar gehalten ist. Der Spannkolben weist fünf axiale Durchgangsöffnungen auf, welche von den Spannbacken durchgriffen werden, so dass diese nach vorne aus dem Spannkolben ragen bzw. aus diesem austreten können. Der Spannkolben und die Spannbacken sind mit zueinander korrespondierenden Schrägflächen versehen, die miteinander in der Weise zusammenwirken, dass eine axiale Stellbewegung des Spannkolbens in entsprechende Radialbewegungen der Spannbacken umgesetzt werden. Zur Führung der Radialbewegungen der Spannbacken weisen diese an ihrer radialen Außenseite prismatische Führungsflächen auf, die mit korrespondierenden Führungsflächen des Spannkolbens in Eingriff stehen.

Die bekannten Spannfutter haben sich in der Praxis durchaus bewährt. Als problematisch wird allerdings angesehen, dass das Spannen von Bauteilen kleinen Durchmessers sich aufwendig gestaltet, insbesondere wenn diese druckempfindlich sind.

Aufgabe der vorliegenden Erfindung ist es daher, eine Spann- oder Greifeinrichtung der eingangs genannten Art so auszugestalten, dass mit hoher Spannpräzision auch Bauteile kleinen Durchmessers, die druckempfindlich sind, gespannt werden können.

Diese Aufgabe ist erfindungsgemäß gemäß Anspruch 1 dadurch gelöst, dass der Grundkörper an seiner Rückseite eine zentrale Ausnehmung aufweist, in welcher ein mit dem Spannkolben verbundenes, ringförmiges Verbindungselement axial geführt ist, dass in dem Grundkörper eine Achse gehalten ist, dass an der Achse eine Zwischenachse axial verstellbar gehalten ist, welche das Verbindungselement axial durchgreift, dass Federelemente, insbesondere Druckfederelemente vorgesehen sind, die sich zwischen dem Verbindungselement und der Zwischenachse abstützen, um das Verbindungselement nach hinten zu drücken, wobei Anschlagmittel vorgesehen sind, welche einen axialen Verstellweg des Verbindungselements nach hinten hin begrenzen, und dass das hintere Ende des Grundkörpers verschlossen ist, so dass zwischen dem Verbindungselement und dem Gehäusekörper an der Rückseite des Verbindungselements in der zentralen Ausnehmung ein Druckraum ausgebildet wird, welcher über eine Druckleitung von außen mit einem Druck beaufschlagbar ist, um das Verbindungselement entgegen der Rückstellkraft der Federelemente nach vorne zu bewegen.

Bei dieser Ausführungsform wird das Werkstück über die Federelemente gespannt. Hierbei wird zunächst der Druckraum, welcher an der Rückseite des Verbindungselementes ausgebildet ist, über die vorgesehene Druckleitung von außen mit einem Druck (hydraulisch oder pneumatisch) beaufschlagt, um das Verbindungselement aus seiner hinteren Endposition, welche durch die Anschlagmittel definiert ist, nach vorne zu drücken und so das Spannfutter zu öffnen. Wenn anschließend der Druckraum entlastet wird, wird das Verbindungselement durch die Rückstellkraft der Federelemente wieder nach hinten gedrückt, um das Spannfutter zu schließen und so ein Bauteil zu spannen. Die Fixierung des Bauteils erfolgt dabei mit der Federkraft der Federelemente.

Der Arbeitshub des Verbindungselementes kann dabei durch eine entsprechende Positionierung der Anschlagmittel sowie einer entsprechenden Anschlagfläche der Zwischenachse, an welcher sich die Federelemente abstützen, vorgegeben werden. Damit lassen sich relativ kleine Spannwege von wenigen Millimetern einstellen. Dies vereinfacht das Spannen von kleinen Bauteilen. Ebenso kann durch geeignete Auswahl der Federelemente auch die Spannkraft gering gewählt werden, so dass sich auch empfindliche Bauteile ohne die Gefahr von Beschädigungen spannen lassen.

Dabei kann der Spanndurchmesserbereich vorgegeben werden, indem die Zwischenachse axial verstellt wird.

Beispielsweise kann die Zwischenachse an ihrem vorderen Endbereich ein Außengewinde aufweisen, das in eine korrespondierende Gewindebohrung des Führungszapfens eingeschraubt ist, so dass die Zwischenachse durch Verdrehen um Ihre Längsachse axial verstellt werden kann. Hierzu kann die Zwischenachse an ihrem vorderen Endbereich entsprechende Eingriffsmittel für ein Drehwerkzeug aufweisen.

Weiter kann die Zwischenachse ein an der Achse axial verschiebbar, aber drehfest gehaltenes Hülsenelement und einen an dem freien Ende des Hülsenelements fixierten Gewindekopf aufweisen, welcher ein mit der Gewindebohrung des Führungszapfens in Eingriff stehendes Außengewinde aufweist, umfassen. Diese geteilte Ausführungsform der Zwischenachse ermöglicht es, die Zwischenhülse an der Zwischenachse in einfacher Weise zu fixieren und insbesondere auch auszutauschen.

Die Anschlagmittel können insbesondere in Form eines radial vorstehenden Absatzes am hinteren Endbereich der Zwischenachse vorgesehen sein.

Gemäß einer Weiterbildung ist vorgesehen, dass eine Zwischenhülse auf die Zwischenachse aufgeschoben ist und an ihrem vorderen Endbereich an einem Axialanschlag der Zwischenachse anliegt, wobei sich die Federelemente zwischen dem Verbindungselement und der Zwischenhülse abstützen. Bei dieser Ausführungsform wird die Zwischenhülse über die Federelemente in ständigem Anschlag an der Zwischenachse gehalten. Durch eine geeignete Wahl der Länge der Zwischenhülse kann auf einfache Weise der Arbeitsschub des Spannkolbens eingestellt werden.

Zweckmäßigerweise ist der Ringspalt, welcher zwischen dem Verbindungselement und der Zwischenachse besteht, abgedichtet, um zu verhindern, dass Druckluft aus dem Druckraum an der Rückseite des Verbindungselements zu dessen Vorderseite gelangt, was zu Funktionsstörungen führen könnte. Ebenso kann das Verbindungselement außenseitig gegenüber dem Grundkörper abgedichtet sein.

Gemäß einer alternativen Ausführungsform ist vorgesehen, dass ein Gewindebolzen an der Achse axialfest, aber um seine Längsachsen drehbar gehalten ist und die Zwischenachse auf den Gewindebolzen aufgeschraubt ist, so dass die Zwischenachse durch Verdrehen des Gewindebolzens axial verstellbar ist, und dass Antriebsmittel vorgesehen sind, um den Gewindebolzen zu drehen. Beispielsweise kann an dem Gewindebolzen ein Zahnkranz drehfest gehalten sein, der von außen insbesondere durch eine Betätigungsöffnung an dem Grundkörper mittels eines Betätigungselements in Drehung versetzbar ist. Der Zahnkranz kann eine Stirnverzahnung aufweisen.

Die Aufgabe der vorliegenden Erfindung ist ferner gemäß Anspruch 7 dadurch gelöst, dass der Grundkörper an seiner Rückseite eine zentrale Ausnehmung aufweist, in welcher eine mit dem Kolben verbundenes Verbindungselement gehalten, insbesondere axial geführt ist, und das Verbindungselement ein Innengewinde aufweist, in welches ein Gewindebolzen eingeschraubt ist, der in dem Grundkörper drehbar, aber axialfest gehalten ist, und dass Antriebsmittel vorgesehen sind, um den Gewindebolzen zu drehen. Dabei kann an dem Gewindebolzen ein Zahnkranz drehfest gehalten sein, der von außen insbesondere durch eine Betätigungsöffnung in dem Grundkörper, mittels eines Betätigungselements in Drehung versetzbar ist. Der Zahnkranz kann beispielsweise in Form einer Stirnverzahnung ausgebildet sein. Bei dieser Ausführungsform wird durch die Betätigungsöffnung in den Grundkörper ein Betätigungselement, wie beispielsweise ein Betätigungsschlüssel, der mit einer zu der Stirnverzahnung des Zahnkranzes korrespondierende Verzahnung aufweist, in den Grundkörper eingesetzt und in Eingriff mit dem Zahnkranz gebracht. Durch Verdrehen des Betätigungsschlüssels wird auch der Zahnkranz und mit diesem der Gewindebolzen gedreht. In der Folge wird das Verbindungselement, welches sich nicht drehen kann, zusammen mit dem damit verbundenen Spannkolben axial bewegt, und diese Axialbewegung des Spannkolbens wird in eine entsprechende Radialbewegung der Spannbacken umgesetzt.

Der Spannkolben trägt zweckmäßigerweise an seinem rückseitigen Ende mehrere sich axial erstreckende Streben, welche entsprechend axiale Durchgangsöffnungen in dem Grundkörper durchgreifen, wobei die Streben an ihren freien Enden durch das Verbindungselement miteinander verbunden, beispielsweise verschraubt sind. Die Funktion des Verbindungselements besteht im Wesentlichen darin, den Spannkolben mit einem entsprechenden Stellantrieb zu verbinden.

Gemäß einer Ausgestaltung der Erfindung ist vorgesehen, dass die Ausnehmung eine derartige Tiefe besitzt, dass in der hinteren Position des Spannkolbens die freien Enden der Streben bzw. dass die freien Enden der Streben verbindende Verbindungselement noch innerhalb der Ausnehmung liegen. Die Ausnehmung hat dabei zunächst den Zweck, einen Stellantrieb zur Betätigung des Spannkolbens ganz oder teilweise aufzunehmen. Weiterhin kann das Verbindungselement in der zentralen Ausnehmung axial geführt sein. Der Spannkolben wird dann über die Ausnehmung geführt. Damit verkleinert sich das Durchmesser/Längen-Verhältnis.

Gemäß einer Ausführungsform der Erfindung ist vorgesehen, dass in der vorderen Stirnfläche des Grundkörpers eine zentrale Aufnahme ausgebildet ist, in welcher die Spannbacken und der Spannkolben angeordnet sind. Gemäß einer Ausgestaltung der vorliegenden Erfindung ist vorgesehen, dass von dem Grundkörper ein koaxial zur Längsachse positionierter Führungszapfen abragt, an dessen Außenseite der Spannkolben axial bewegbar geführt ist. Dieser Ausführungsform liegt die Überlegung zugrunde, die Führung des Spannkolbens nicht mehr an seiner Außenfläche vorzunehmen, sondern nach innen zu verlagern, indem der Spannkolben an dem erfindungsgemäß vorgesehenen Führungszapfen geführt wird. Durch die Verlagerung der Führung nach innen hin verkleinert sich das Durchmesser/Längen-Verhältnis der Führung, wodurch eine hohe Führungsstabilität und -qualität erreicht wird.

Dabei kann vorgesehen sein, dass der Grundkörper axial unterteilt ist und ein die Aufnahme definierendes Grundkörperelement und eine den Führungszapfen tragendes Grundkörperelement aufweist, wobei die beiden Grundkörperelemente durch korrespondierende Zentriermittel zueinander ausgerichtet und miteinander lösbar verbunden, insbesondere verschraubt sind. Durch die geteilte Ausbildung des Grundkörpers wird eine einfache Herstellung insbesondere des Führungszapfens erzielt.

Gemäß einer weiteren Ausgestaltung der Erfindung ist vorgesehen, dass der Führungszapfen hülsenartig ausgebildet ist und an seinem vorderen Endbereich aus dem Grundkörper ragt, wobei in der Wandung des Führungszapfens Längsschlitze vorgesehen sind, welche von den Spannbacken durchgriffen werden. Diese Ausgestaltung bietet die Möglichkeit, die Spannbacken zusammenzufahren, bis sie einander berühren. Dazu sind die Längsschlitze zweckmäßigerweise zur vorderen Stirnseite des Führungszapfens hin offen.

In an sich bekannter Weise kann der Spannkolben axiale Durchgangsöff nungen aufweisen, welche von den Spannbacken durchgriffen werden, so dass diese nach vorne aus dem Spannkolben ragen können. Die Durchgangsöffnungen können dabei so ausgebildet sein, dass die Spannbacken in ihnen seitlich geführt werden.

Gemäß einer Ausführungsform der Erfindung weisen die Spannbacken jeweils an einer Seitenfläche eine Führungsnut auf, in welcher eine zugeordnete Führungsnase des Spannkolbens eingreift, wobei jede Führungsnase mit Führungsflächen der zugeordneten Führungsnut zusammenwirkt, um Axialbewegungen des Spannkolbens in Radialbewegungen der Spannbacken umzusetzen. Die Führungsnuten sind dabei in bevorzugter Weise nur an einer Seitenfläche der Spannbacken, und zwar an derjenigen Seitenfläche, welche in der Draufsicht in Richtung des entgegengesetzten Uhrzeigersinns weist, ausgebildet. Dieser Ausgestaltung liegt die Überlegung zugrunde, die Führungsflächen der Spannbacken, welche bei den bekannten Spannfuttern an der radialen Außenseite der Spannbacken vorgesehen sind, radial weiter nach innen in die Seitenflächen zu verlagern. Hierdurch verkleinert sich das Durchmesser/Längen-Verhältnis der Spannbackenführungen, wodurch eine erhöhte Stabilität und Führungsgenauigkeit erzielt wird.

In weiterer Ausgestaltung dieser Ausführungsform kann vorgesehen sein, dass jede Führungsnut eine radial innere Führungsfläche und eine radial äußere Führungsfläche aufweist und die zugeordnete Führungsnase mit beiden Führungsflächen in Kontakt steht, so dass eine nach vorne gerichtete Axialbewegung des Spannkolbens durch ein Zusammenwirken der Außenfläche der Führungsnase mit der radial äußeren Führungsfläche der Führungsnut in eine radial nach außen gerichtete Bewegung der Spannbacken umgesetzt wird und eine nach hinten gerichtete Axialbewegung des Spannkolbens durch ein Zusammenwirken der Innenfläche der Führungsnase mit der radial inneren Führungsfläche in eine radial nach innen gerichtete Spannbewegung der Spannbacke umgesetzt wird.

In bevorzugter Weise sind die Führungsnasen an einem vorderen Endbereich des Spannkolbens bzw. am vorderen Ende der Durchgangsöffnungen, welche von den Spannbacken durchgriffen werden, ausgebildet. Damit erfolgt der Eingriff zwischen den Führungsnasen und den Führungsnuten der Spannbacken radial soweit innen wie möglich, so dass das Durchmesser/ Längen-Verhältnis der Spannbackenführungen minimiert wird. Ferner wird eine maximale Führungslänge gewährleistet.

Gemäß einer weiteren Ausführungsform der Erfindung ist vorgesehen, dass die Spannbacken mit ihrer hinteren Stirnfläche flächig an einer senkrecht zur Längsachse liegenden Kontaktfläche des Grundkörpers, insbesondere eines den Führungszapfen tragenden Grundkörperelements, anliegen. Druckkräfte, welche auf die Spannbacken führen, werden somit unmittelbar in den Grundkörper eingeleitet. Dabei kann am hinteren Ende der Spannbacken jeweils eine radiale Nut in einer Seitenfläche der Spannbacken ausgebildet sein, in welche ein Haltesteg eingreift, um die Spannbacke axial an der Anlagefläche zu sichern. Der Haltesteg besitzt dabei keine Führungs-, sondern nur eine Sicherungsfunktion. Die radialen Nuten können zweckmäßigerweise an derselben Seitenfläche der Spannbacken wie die Führungsnuten ausgebildet sein. Dann ist nur eine einseitige Bearbeitung der Spannbacken für die Herstellung der Nuten erforderlich.

Die Haltestege können an Halteelementen ausgebildet sein, welche an dem Grundkörper und insbesondere dem den Führungszapfen tragenden hinteren Grundkörperelement festgeschraubt sind.

In bevorzugter Weise umfasst die erfindungsgemäße Spann- oder Greifeinrichtung drei oder mehr Spannbacken. Insbesondere können genau fünf oder genau sechs Spannbacken vorgesehen sein.

Hinsichtlich weiterer vorteilhafter Ausgestaltungen der Erfindung wird auf die nachfolgende Beschreibung von drei Ausführungsbeispielen unter Bezugnahme auf die beiliegende Zeichnung verwiesen. In der Zeichnung zeigt
- Figur 1: in perspektivischer Vorderansicht eine erste Ausführungsform einer erfindungsgemäßen Spann- oder Greifeinrichtung gemäß der vorliegenden Erfindung im geöffneten Zustand,
- Figur 2: die Spann- oder Greifeinrichtung aus Figur 2 in perspektivischer Ansicht von unten,
- Figur 3: die Spann- oder Greifeinrichtung aus Figur 1 im geschlossenen Zustand,
- Figur 4: die Spann- oder Greifeinrichtung aus Figur 3 in perspektivischer Ansicht von schräg unten,
- Figur 5: die Spann- oder Greifeinrichtung aus Figur 1 in Draufsicht,
- Figur 6: die Spann- oder Greifeinrichtung aus Figur 5 im Schnitt entlang der Linie A-A,
- Figur 7: die Spann-oder Greifeinrichtung aus Figur 5 im Schnitt entlang der Linie B-B,
- Figur 8: einen Ausschnitt der Schnittdarstellung der Spann- oder Greifeinrichtung aus Figur 6 im Schnitt entlang der Linie E-E, welcher in vergrößerter Darstellung den Eingriff einer Führungsnase des Kolbens mit einer Führungsnut einer Spannbacke zeigt,
- Figur 9: einen Ausschnitt der Schnittdarstellung aus Figur 6 im Schnitt entlang der Linie P3-P3,
- Figur 10: die Spann- oder Greifeinrichtung aus Figur 3 in Draufsicht,
- Figur 11: die Spann- oder Greifeinrichtung aus Figur 10 im Längsschnitt entlang der Linie A-A,
- Figur 12: in perspektivischer Vorderansicht eine zweite Ausführungsform einer erfindungsgemäßen Spann- oder Greifeinrichtung im geöffneten Zustand,
- Figur 13: die Spann-oder Greifeinrichtung aus Figur 12 im geschlossenen Zustand,
- Figur 14: die Spann- oder Greifeinrichtung aus Figur 12 in Draufsicht,
- Figur 15: die Spann- oder Greifeinrichtung aus Figur 14 im Längsschnitt entlang der Linie A-A,
- Figur 16: in vergrößerter Darstellung einen Ausschnitt einer Schnittdarstellung der Spann- oder Greifeinrichtung aus Figur 14 entlang der Linie D-D, welche den Betätigungsmechanismus für den Spannkolben zeigt,
- Figur 17: die Spann- oder Greifeinrichtung aus Figur 13 in Draufsicht,
- Figur 18: die Spann- oder Greifeinrichtung aus Figur 17 in Vorderansicht,
- Figur 19: die Spann- oder Greifeinrichtung aus Figur 17 im Längsschnitt entlang der Linie A-A,
- Figur 20: in perspektivischer Vorderansicht eine dritte Ausführungsform einer erfindungsgemäßen Spann- oder Greifeinrichtung im geöffneten Zustand,
- Figur 21: die Spann- oder Greifeinrichtung aus Figur 20 im geschlossenen Zustand,
- Figur 22: die Spann- oder Greifeinrichtung aus Figur 20 in Draufsicht,
- Figur 23: die Spann- oder Greifeinrichtung aus Figur 22 im Längsschnitt entlang der Linie A-A, wobei sich die Spannbacken in ihrem völlig geöffneten Zustand befinden und der Druckraum druckbeaufschlagt ist,
- Figur 24: die Spann- oder Greifeinrichtung aus Figur 22 im Längsschnitt entlang der Linie B-B, wobei sich die Spannbacken in ihrem völlig geöffneten Zustand befinden und der Druckraum druckbeaufschlagt ist,
- Figur 25: die Spann- oder Greifeinrichtung aus Figur 22 entlang der Linie D-D, wobei nur ein vergrößerter Teilausschnitt am unteren Endbereich gezeigt ist,
- Figur 26: die Spann- oder Greifeinrichtung aus Figur 23, wobei der Druckraum entlastet ist,
- Figur 27: die Spann- oder Greifeinrichtung aus Figur 23, bei welchem der eingestellte Spanndurchmesser verringert und der Druckraum druckbeaufschlagt ist,
- Figur 28: die Spann- oder Greifeinrichtung aus Figur 27, wobei der Druckraum entspannt ist,
- Figur 29: eine vierte Ausführungsform einer erfindungsgemäßen Spann-oder Greifeinrichtung in Draufsicht,
- Figur 30: die Spann- oder Greifeinrichtung aus Figur 29 im Längsschnitt entlang der Linie A-A, wobei sich die Spannbacken in ihrem völlig geöffneten Zustand befinden und der Druckraum druckbeaufschlagt ist,
- Figur 31: die Spann- oder Greifeinrichtung aus Figur 29 im Längsschnitt entlang der Linie B-B, wobei sich die Spannbacken in ihrem völlig geöffneten Zustand befinden und der Druckraum druckbeaufschlagt ist,
- Figur 32: die Spann- oder Greifeinrichtung aus Figur 29 im Schnitt entlang der Linie D-D, welche den Betätigungsmechanismus für den Gewindebolzen zeigt,
- Figur 33: die Spann- oder Greifeinrichtung aus Figur 30, wobei der Druckraum entlastet ist,
- Figur 34: die Spann- oder Greifeinrichtung aus Figur 33 im Längsschnitt entlang der Linie P4-P4,
- Figur 35: die Spann- oder Greifeinrichtung aus Figur 30, bei welcher der eingestellte Spanndurchmesser auf das Minimum reduziert und der Druckraum entlastet ist,

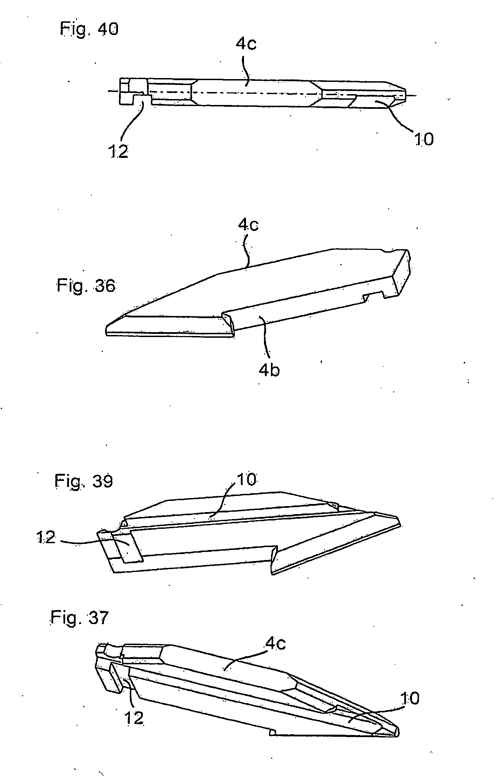

- Figur 36: eine Spannbacke einer erfindungsgemäßen Spann- oder Greifeinrichtung in perspektivischer Vorderansicht von schräg unten,
- Figur 37: die Spannbacke aus Figur 36 in perspektivischer Vorderansicht von schräg oben,

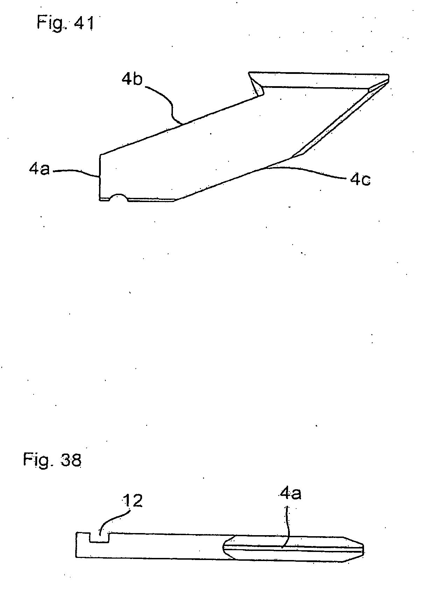

- Figur 38: die Spannbacke aus Figur 36 von unten betrachtet,
- Figur 39: die Spannbacke aus Figur 36 in einer perspektivischen Ansicht von schräg unten/hinten,
- Figur 40: die Spannbacke aus Figur 36 in Draufsicht und
- Figur 41: die Spannbacke aus Figur 36 in Rückansicht.

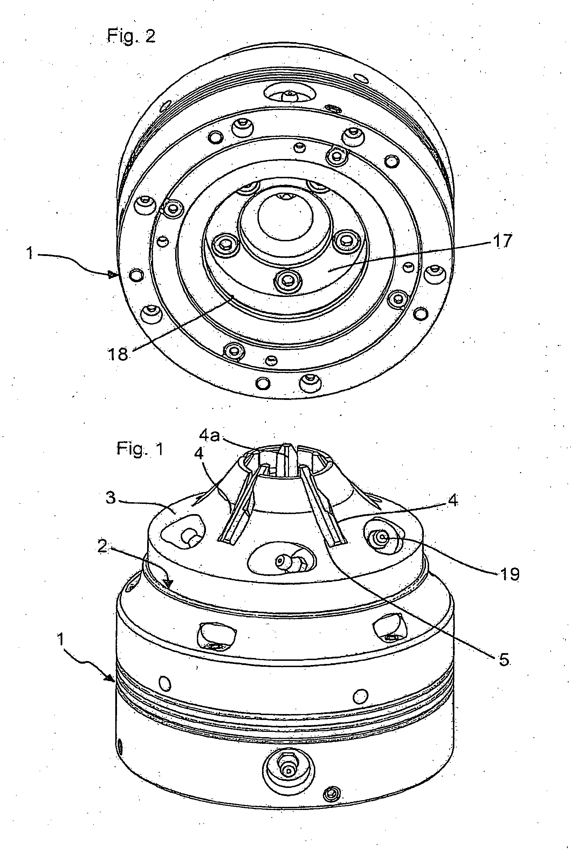

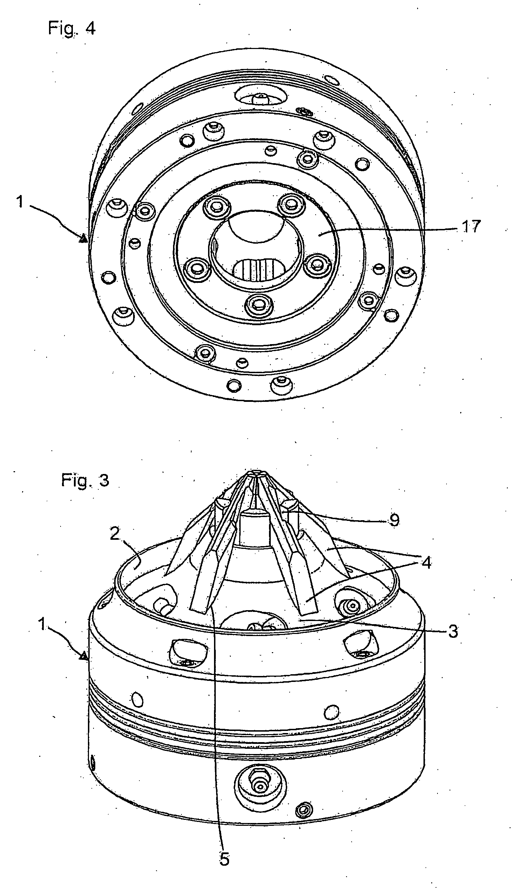

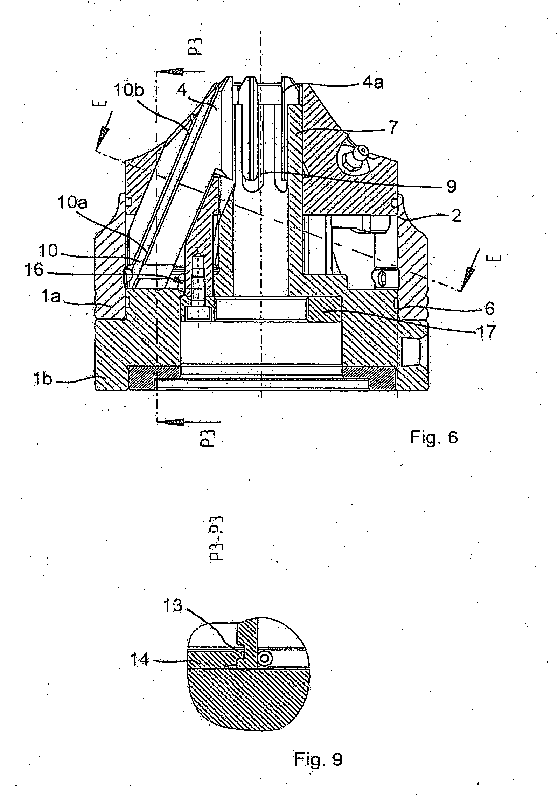

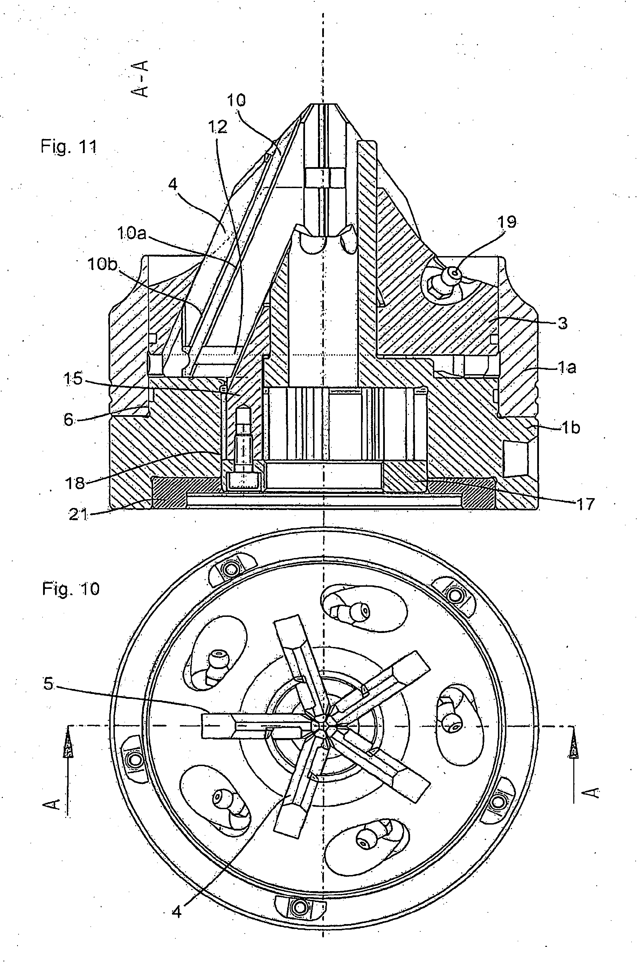

In den Figuren 1 bis 11 ist eine erste Ausführungsform einer erfindungsgemäßen Spann- oder Greifeinrichtung gemäß der vorliegenden Erfindung dargestellt. Diese ist hier als ein Präzisions-Spannfutter ausgebildet, das insbesondere zum Schleifen von Werkzeugen eingesetzt wird. Das Spannfutter umfasst einen Grundkörper 1 aus einem formsteifen Material, der eine zylindrische Grundform besitzt. In dem Grundkörper 1 ist eine zentrale Aufnahme 2 ausgebildet, die eine Längsachse X des Spannfutters definiert und zu einer vorderen Stirnfläche des Grundkörpers 1 offen ausgebildet ist. In der zentralen Aufnahme 2 des Grundkörpers 1 ist ein Spannkolben 3 eingesetzt und darin axial, d.h. in Richtung der Längsachse X, zwischen einer hinteren und einer vorderen Endstellung bewegbar gehalten. Der Spannkolben 3 besitzt eine zylindrische Grundform, wobei jedoch die vordere Stirnfläche kegelstumpfförmig zum vorderen Ende zuläuft.

Das Spannfutter umfasst weiterhin insgesamt fünf Spannbacken 4, die ebenfalls in der zentralen Aufnahme 2 des Grundkörpers 1 positioniert und radial zwischen einer äußeren, offenen Stellung und einer inneren Spannstellung gemeinsam bewegbar sind. Die Spannbacken 4 werden von dem Spannkolben 3 umgriffen und sind in entsprechenden Durchgangsöffnungen 5 des Spannkolbens 3, welche von den Spannbacken 4 axial durchgriffen werden, so dass diese nach vorne aus dem Spannkolben 3 ragen, gehalten. Die Spannbacken 4 sind seitlich in den Durchgangsöffnungen 5 geführt und abgestützt. Die Spannbacken 4 laufen dabei an ihrem oberen Ende spitz zu und definieren am Bereich ihrer vorderen Enden radial nach innen weisenden Spannflächen 4a. Ferner weisen die Spannbacken 4 an ihrer radialen Außenseite eine geneigte Außenfläche 4c und an ihrer radialen Innenseite unterhalb der Spannflächen 4a eine geneigte Innenfläche 4b auf. Die diesen radialen Innen- und Außenflächen 4b, 4c zugeordneten Wandungen des Spannkolbens 3, welche die Durchgangsöffnungen 5 des Spannkolbens 3 definieren, sind entsprechend geneigt.

Der Grundkörper 1 ist axial unterteilt und weist ein vorderes, hülsenartig ausgebildetes und die Aufnahme 2 definierendes Grundkörperelement 1a, und ein hinteres Grundkörperelement 1b auf, wobei die beiden Grundkörperelemente 1a, 1b koaxial zueinander ausgerichtet und miteinander lösbar verbunden, hier verschraubt sind. Zur Ausrichtung der beiden Grundkörperelemente 1 a, 1 b ist an dem hinteren Grundkörperelement 1b ein ringförmiger Absatz ausgebildet, welcher in die Aufnahme 2 des vorderen Grundkörperelements 1a eingreift.

Das hintere Grundkörperelement 1b trägt an seiner vorderen Stirnfläche welche in der zentralen Aufnahme 2 positioniert ist, einen Führungszapfen 7, der hülsenartig ausgebildet ist und die Aufnahme 2 durchgreift. Die Außenfläche des Führungszapfens 7 bildet dabei eine zylindrische Führungsfläche, an welcher der Spannkolben 3 axial bewegbar geführt ist. Hierzu weist der Spannkolben 3 eine entsprechende Führungsfläche 8 auf. In der Wandung des Führungszapfens 7 sind insgesamt fünf Längsschlitze 9 vorgesehen, die zur vorderen Seite des Führungszapfens 7 offen sind und von den Spannbacken 4 radial durchgriffen werden.

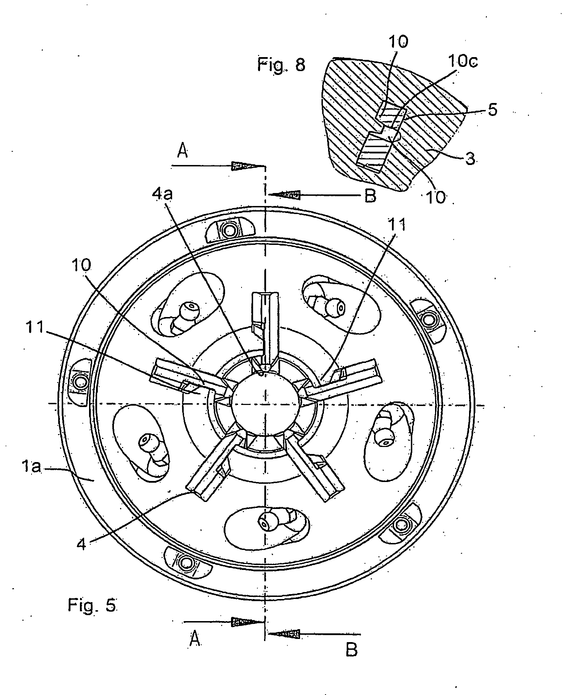

Die Spannbacken 4 weisen jeweils in ihrer Seitenfläche, welche in der Draufsicht der Figur 5 in Richtung des entgegengesetzten Uhrzeigersinns weist, eine Führungsnut 10 auf. Die Führungsnuten 10 erstrecken sich dabei jeweils von der hinteren Stirnfläche der Spannbacken 4 bis knapp unterhalb von deren vorderen Ende und sind geneigt zur Längsachse X des Spannfutters ausgerichtet. Die Neigung entspricht dabei der Neigung der geneigten Innen- und Außenflächen 4b, 4c der Spannbacken 4. Den Führungsnuten 10 ist jeweils eine Führungsnase 11 zugeordnet, welche an dem Spannkolben 3 gehalten ist und am radial inneren Ende der Durchgangsöffnungen 5 des Spannkolbens 3 positioniert sind und in die Führungsnuten 10 eingreifen. Dabei weist jede Führungsnut 10 eine radial innere Führungsfläche 10a und eine radial äußere Führungsfläche 10b auf und die zugeordnete Führungsnase 11 steht mit beiden Führungsflächen 10a, 10b in Kontakt, so dass eine nach vorne gerichtete Axialbewegung des Spannkolbens 3 durch ein Zusammenwirken der Außenfläche der Führungsnase 11 mit der radial äußeren Führungsfläche 10b der Führungsnut 10 in eine radial nach außen gerichtete Bewegung der Spannbacken 4 umgesetzt wird und in umgekehrter Weise eine nach hinten gerichtete Axialbewegung des Spannkolbens 3 durch ein Zusammenwirken der Innenfläche der Führungsnase 11 mit der radial inneren Führungsfläche 10a der Führungsnut 10 in eine radial nach innen gerichtete Spannbewegung der Spannbacken 3 umgesetzt wird. Bei diesen Axialbewegungen wird der Spannkolben 3 innen an dem Führungszapfen 7 geführt. Aufgrund des geringen Durchmessers der Führungshülse 7 und der zur Verfügung stehenden Führungslänge ergibt sich ein gutes Durchmesser/Längen-Verhältnis für die Führung, so dass diese stabil ist.

Die Spannbacken 4 können ferner vollständig zusammengefahren werden, so dass auch sehr kleine Durchmesser gespannt werden können. Durch die radial weit innen liegende Position der Führungsnasen 11 ist auch das Durchmesser/Längen-Verhältnis der Führungen für die Spannbacken 4 klein, so dass eine hohe Stabilität erzielt wird. Ferner ist von Vorteil, dass die Führungsnasen 11 am axial vorderen Ende und damit im Bereich der Spannflächen 4a, wo die höchste Führungsgenauigkeit erforderlich ist, liegen.

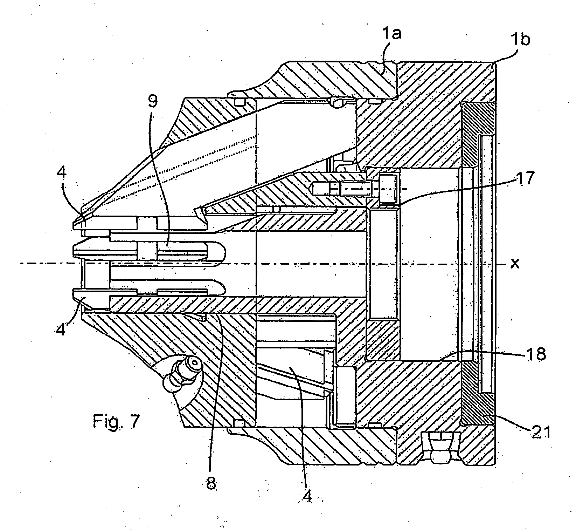

Wie die Figuren 7 und 8 gut erkennen lassen, liegen die Spannbacken 4 jeweils mit ihrer hinteren Stirnfläche an einer senkrecht zur Längsachse X liegenden Kontaktfläche des hinteren Grundkörperelements 1b an, die hier von der vorderen Stirnfläche des hinteren Grundkörperelements 1 b gebildet wird. Weiterhin ist am hinteren Ende der Spannbacken 4 jeweils eine radiale Nut 12 in derjenigen Seitenfläche der Spannbacken 4, in welcher auch die Führungsnuten 10 ausgebildet sind, vorgesehen. In die radiale Nut 12 greift ein Haltesteg 13 ein, um die Spannbacken 4 axial an der Kontaktfläche zu sichern. Die Haltestege 13 sind dabei an Halteelementen 14 ausgebildet, welche an dem hinteren Grundkörperelement 1b festgeschraubt sind.

Um den Spannkolben 3 axial zu verstellen, trägt dieser an seinem rückseitigen Ende mehrere sich axial erstreckende Streben 15, welche entsprechende axiale Durchgangsöffnungen 16 in dem hinteren Grundkörperelement 1b durchgreifen. Die Streben 15 sind an ihren freien Enden durch einen Verbindungsring 17 miteinander verbunden, welcher an den Streben 15, nämlich den zur Rückseite weisenden Stirnflächen der Streben 15, verschraubt ist. Der Verbindungsring 17 ist in einer zentralen Ausnehmung 18 axial verschiebbar gehalten, welche in dem hinteren Grundkörperelement 1b ausgebildet und zu dessen Rückseite offen ist. An dem Verbindungsring 17 greift ein hier nicht näher dargestellter Stellantrieb, der beispielsweise in Form eines Motors, eines Hydraulikantriebs oder dergleichen ausgebildet sein kann, ein.

Im Übrigen sind an dem Spannkolben 3 insgesamt fünf Schmiernippel 19 vorgesehen, über welche den Durchgangsöffnungen 5 des Spannkolbens 3, in welchen die Spannbacken 4 positioniert sind, ein Schmiermittel zugeführt werden kann.

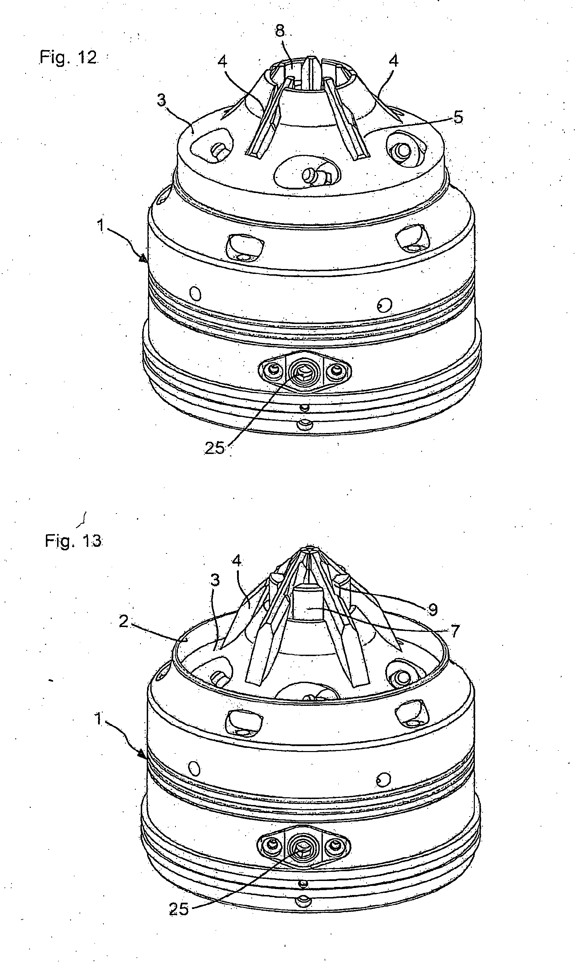

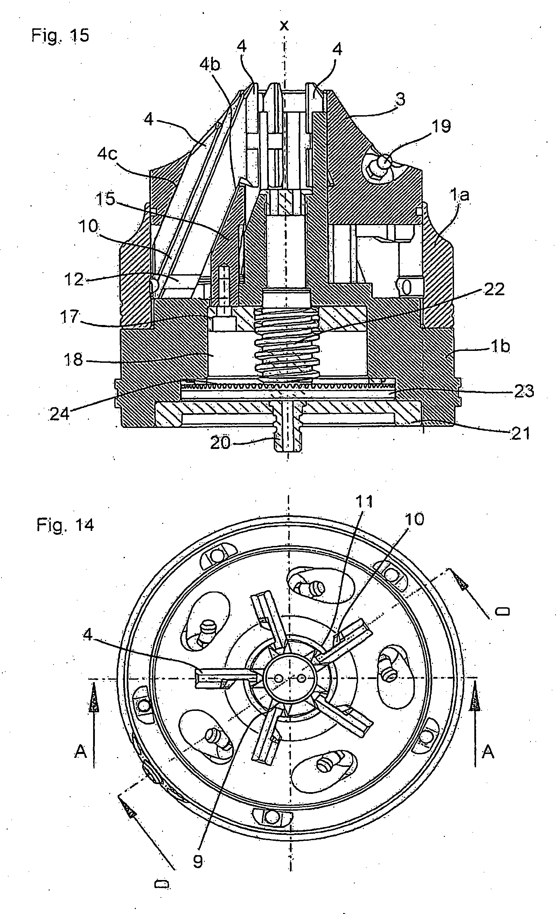

In den Figuren 12 bis 19 ist eine zweite Ausführungsform eines erfindungsgemäßen Spannfutters dargestellt. Diese entspricht der zuvor anhand der Figuren 1 bis 10 beschriebenen Ausführungsform. Der einzige Unterschied besteht darin, dass ein manueller Stellantrieb zur Verstellung des Spannkolbens 3 vorgesehen ist. Dieser umfasst einen Gewindebolzen 20, der in dem hinteren Grundkörperelement 1 b drehbar, aber axial festgehalten ist. Konkret ist der Gewindebolzen 20 an seinem vorderen Ende in der Führungshülse 7 drehbar gehalten, und an seinem hinteren Ende ist er in einem Deckel 21 fixiert, welcher die Ausnehmung 18 des hinteren Grundkörperelements 1b an seiner offenen Rückseite verschließt. Der Gewindebolzen 20 ist hier zweitelig ausgebildet und umfasst ein erstes Gewindebolzenelement 20a, welches an dem Deckel 21 gehalten ist, und ein zweites Gewindebolzenelement 20b, welches auf das erste Gewindebolzenelement 20a aufgeschoben und an diesem drehfest gehalten ist. Das zweite Gewindebolzenelement 20b weist dabei ein Außengewinde 22 auf, welches den Verbindungsring 17 durchgreift und in diesen eingeschraubt ist, wozu der Verbindungsring 17 mit einem entsprechenden Innengewinde versehen ist. Das zweite Gewindebolzenelement 20b umfasst ferner einen Zahnkranz 23, der radial nach außen abragt und an seiner nach vorne weisenden Stirnseite eine Stirnverzahnung 24 trägt.

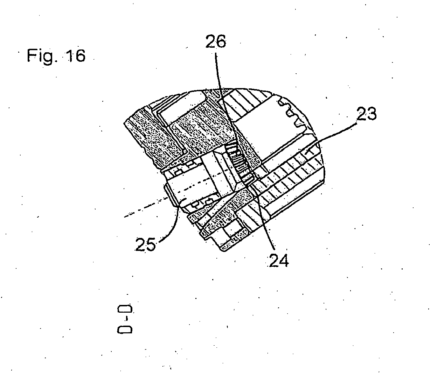

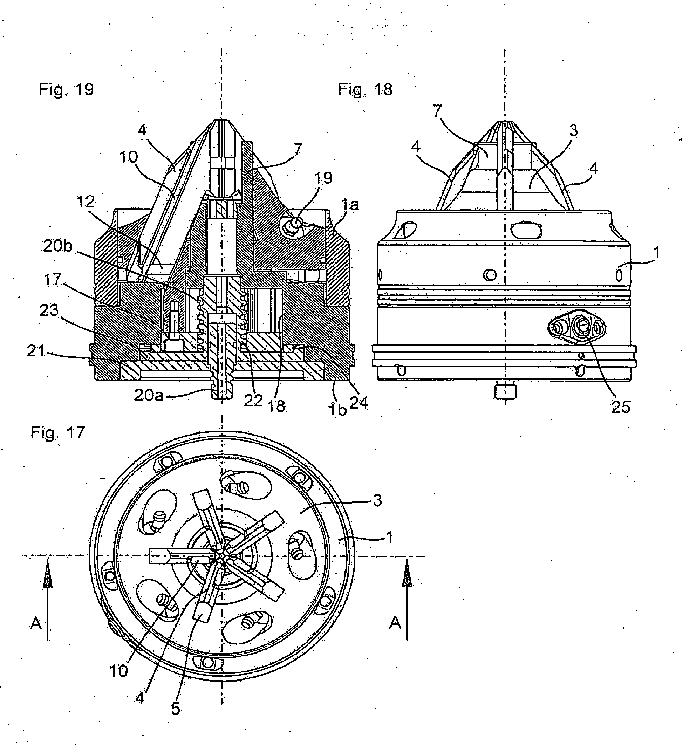

Wie insbesondere die Figuren 16 und 18 erkennen lassen, ist in dem Grundkörper 1 eine Betätigungsöffnung vorgesehen, in welche ein Betätigungselement 25 eingesetzt und drehbar gehalten ist. Das Betätigungselement 25 trägt an seinem in den Grundkörper 1 ragenden Ende eine Verzahnung 26, welche mit der Stirnverzahnung 24 des Zahnkranzes 23 in Eingriff steht, so dass eine Drehung des Betätigungselements 25 um seine Achse in eine Drehbewegung des Zahnkranzes 23 und damit des Gewindebolzens 20 um die Längsachse X in eine Axialbewegung des Verbindungsrings 17, der sich nicht drehen kann, umgesetzt wird mit der Folge, dass auch der Spannkolben 3 axial bewegt wird.

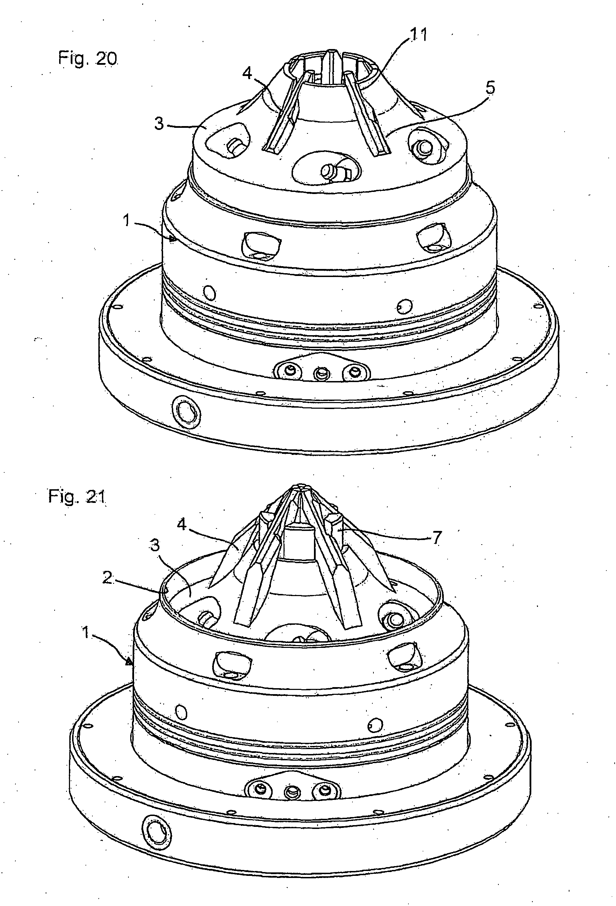

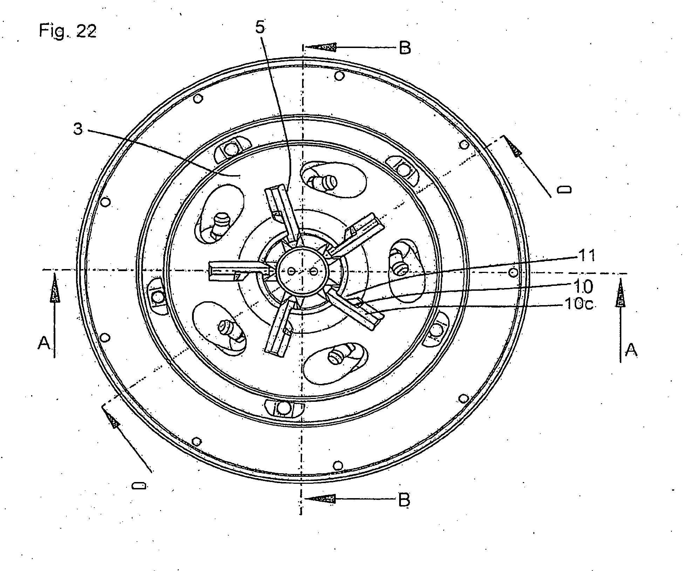

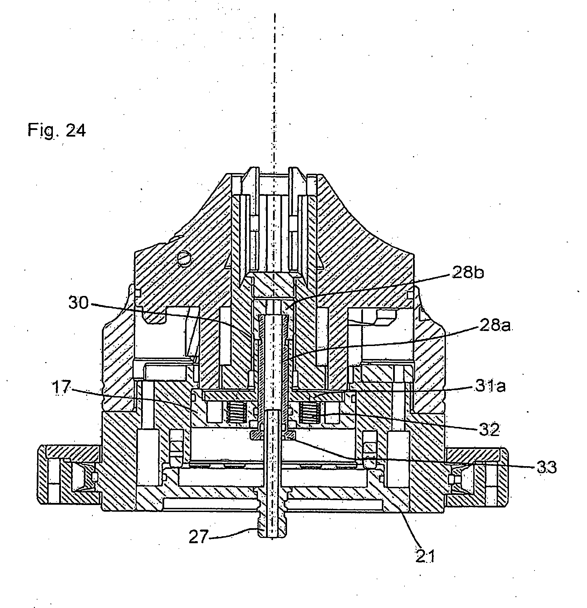

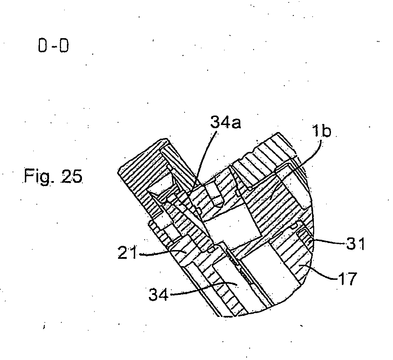

In den Figuren 20 bis 28 ist eine dritte Ausführungsform eines erfindungsgemäßen Spannfutters dargestellt. Dieses unterscheidet sich von den zuvor beschriebenen Ausführungsformen im Wesentlichen nur hinsichtlich der Ausgestaltung des Stellantriebes für den Spannkolben 3. Dieser ist in einer zentralen Ausnehmung 18 des Grundkörpers 1, hier des hinteren Grundkörperelements 1 b untergebracht, welche an ihrer offenen Rückseite durch einen Deckel 21 verschlossen ist. Der Stellantrieb umfasst eine Achse 27, welche an dem Deckel 21 an zentraler Position, d.h. koaxial zu der Längsachse X, gehalten ist und in die Ausnehmung 18 ragt. An der Achse 27 ist eine Zwischenachse 28 axial verschiebbar gehalten, wobei die Zwischenachse 28 an ihrem vorderen Ende ein Außengewinde 29 aufweist, das in eine korrespondierende Gewindebohrung 30 des hohl ausgebildeten Führungszapfens 7 eingeschraubt ist. Konkret umfasst die Zwischenachse 28 ein an der Antriebsachse 27 axial verschiebbar gehaltenes Hülsenelement 28a und einen an dem freien Ende des Hülsenelements 28a fixierten Gewindekopf 28b, welcher ein mit der Gewindebohrung 30 des Führungszapfens 7 in Eingriff stehendes Außengewinde aufweist. Die Zwischenachse 28 durchgreift den Verbindungsring 17 axial, wobei ein zwischen den Bauteilen gebildeter Ringspalt luftdicht abgedichtet ist. Die Zwischenachse 28 trägt wiederum eine Zwischenhülse 31, welche auf die Zwischenachse 28 aufgeschoben ist. Wie die Zeichnung gut erkennen lässt, liegt die Zwischenhülse 31 an ihrem oberen Ende an einem entsprechenden Absatz der Zwischenachse 28, der hier durch den Gewindekopf 28b gebildet wird, an, und weist an seinem unteren Ende einen Anlageflansch 31 a auf.

Der Stellantrieb umfasst ferner mehrere Federelemente, hier Druckfederelemente 32, die sich zwischen dem Verbindungselement 17 und dem Anlageflansch 31a abstützen. In der dargestellten Ausführungsform sind die Druckfederelemente 32 in entsprechenden Bohrungen des Verbindungselementes 17 positioniert und stützen sich an ihrem oberen Endbereich an dem Anlageflansch 31a der Zwischenhülse 31 ab, so dass diese in Anlage an dem Gewindekopf 28b gehalten wird. Die Druckfederelemente 32 bewirken, dass das Verbindungselement 17 nach hinten gedrückt wird. Um den Bewegungsweg nach hinten zu begrenzen, sind an dem hinteren Endbereich der Zwischenachse 28 Anschlagmittel 33 vorgesehen, die hier in Form eines radial vorstehenden Absatzes ausgebildet sind.

Der an der Rückseite des Verbindungselements 17 vorgesehene Bereich der Ausnehmung 18 ist als ein Druckraum 34 ausgebildet, welcher über eine Druckleitung 34a von außen mit einem Druck beaufschlagbar ist.

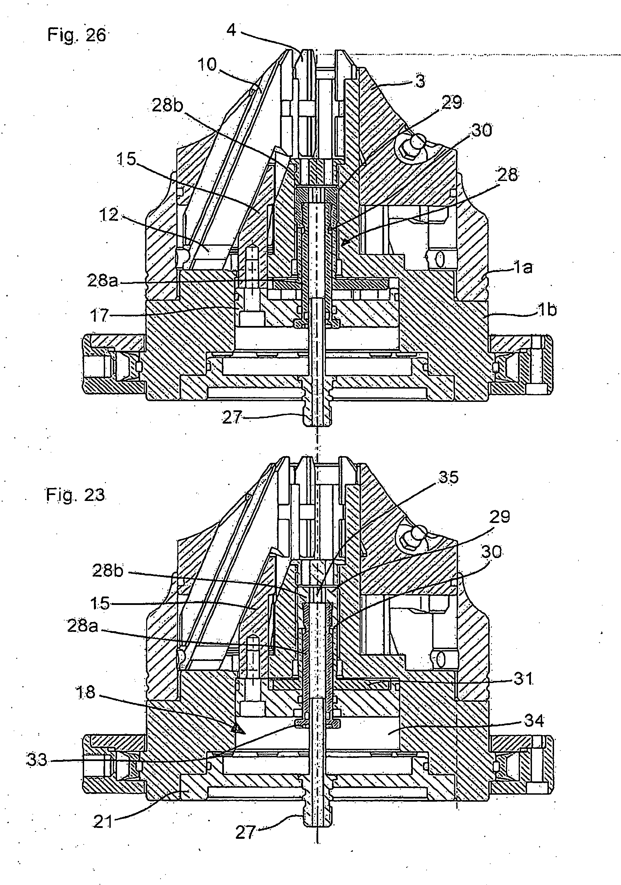

In der Figur 26 ist die Spanneinrichtung in einer Ausgangsstellung dargestellt, in welcher der Druckraum 34 drucklos ist und entsprechend das Verbindungselement 17 durch die Kraft der Druckfederelemente 32 nach unten gegen den Axialanschlag 33 der Zwischenachse 28 gedrückt wird. Wenn der Druckraum 34 nun mit einem Druckmedium, hier Druckluft beaufschlagt wird, wird das Verbindungselement 17 und damit der Spannkolben 3 entgegen der Rückstellkraft der Druckfederelemente 32 aus der in Figur 26 dargestellten Stellung in die in Figur 23 dargestellte Stellung angehoben, wodurch die Spannbacken 4 leicht geöffnet werden, um ein Bauteil einsetzen zu können. Wird anschließend der Druckraum 34 wieder entlastet, wird das Verbindungselement 17 durch die Rückstellkraft der Druckfederelemente 32 nach unten gedrückt, so dass die Spannbacken 4 geschlossen werden, um ein zwischen ihnen positioniertes Bauteil zu spannen. Die Fixierung des Bauteils zwischen den Spannbacken 4 erfolgt dabei allein durch die Federkraft der Druckfederelemente 32.

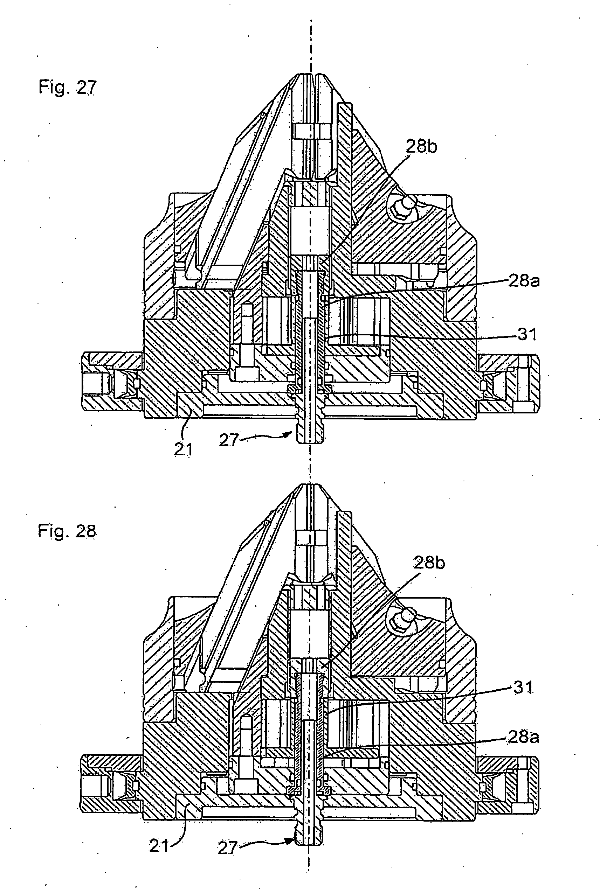

Wenn kleinere Bauteile gespannt werden sollen, wird die Position der Zwischenachse 28 mit dem daran gehaltenen Verbindungselement 17 verändert. Hierzu wird ein Innensechskantschlüssel von oben durch die Führungshülse 7 in einem entsprechenden Eingriffsbereich 35 des Gewindekopfes 28b gesteckt, um diesen weiter nach unten zu drehen. Dies ist bis in die in Figur 28 dargestellte untere Endlage möglich, in welcher das Verbindungselement 17 nahezu auf dem Deckel 21 aufliegt. Ein geringer Restspalt muss vorhanden sein, damit Druckluft noch zwischen den Deckel 21 und das Verbindungselement 17 gelangen kann. Durch die Verstellung der Zwischenachse 28 werden auch die Zwischenhülse 31 und der Verbindungskolben 17 nach unten bewegt, wodurch die Spannbacken 4 weiter geschlossen werden. Wird nun der Druckraum 34 mit Druck beaufschlagt, wird das Verbindungselement 17 aus der in Figur 28 dargestellten Lage in die Figur 27 dargestellte Lage angehoben. Dabei werden die Spannbacken 4 entsprechend des Verstellweges geöffnet, so dass ein Bauteil zwischen die Spannbacken 4 eingesetzt werden kann. Wird anschließend der Druckraum entlastet, wird das Verbindungselement 17 und damit der Spannkolben 3 durch die Rückstellkraft der Druckfederelemente 32 wieder abgesenkt, so dass das Bauteil zwischen den Spannbacken 4 fixiert wird,

Wenn der Arbeitshub des Verbindungselements 17 und damit des spannkolbens 3 verändert werden soll, braucht lediglich eine kürzere Zwischenhülse 31 verwendet zu werden, ggf. ist es auch erforderlich, entsprechend Druckfederelemente 32 anderer Länge einzusetzen. Auch kann die Spannkraft individuell vorgegeben werden, indem Druckfederelemente 32 entsprechender Steifigkeit verwendet werden.

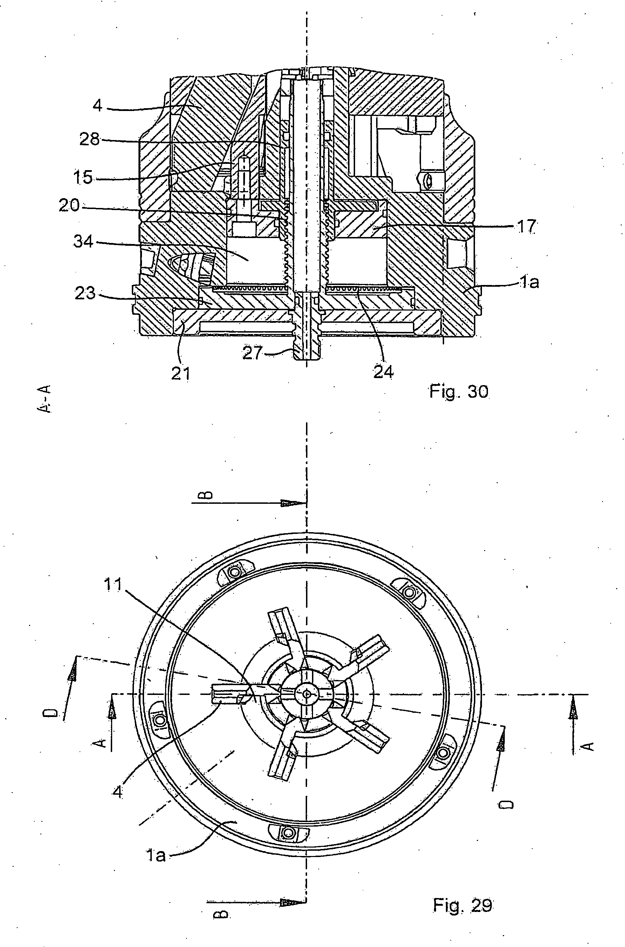

In den Figuren 29 bis 35 ist schließlich eine vierte Ausführungsform eines erfindungsgemäßen Spannfutters dargestellt, welches sich von den zuvor beschriebenen Ausführungsformen im Wesentlichen hinsichtlich der Ausgestaltung des Stellantriebs für den Spannkolben 3 unterscheidet. Dieser Stellantrieb stellt technisch gesehen eine Kombination der Stellantriebe von der zweiten und dritten Ausführungsform dar. Der Spannkolben 3 ist in einer zentralen Ausnehmung 18 des Grundkörpers 1, hier des hinteren Grundkörperelements 1b untergebracht, welche an ihrer offenen Rückseite durch einen Deckel 21 verschlossen ist. Der Stellantrieb umfasst eine Achse 27, welche an dem Deckel 21 an zentraler Position, d.h. koaxial zu der Längsachse X gehalten ist und in die Ausnehmung 18 ragt. An der Achse 27 ist ein Gewindebolzen 20 axialfest aber drehbar gehalten. Konkret ist der Gewindebolzen 20 an seinem vorderen Ende in der Führungshülse 7 drehbar gehalten, und an seinem hinteren Ende ist er auf die Achse 27 aufgeschoben. An dem Gewindebolzen 27 ist eine Zwischenachse 28 gehalten, die auf den Gewindebolzen 20 aufgeschraubt ist. Die Zwischenachse 28 durchgreift den Verbindungsring 17 axial, wobei ein zwischen den Bauteilen gebildeter Ringspalt luftdicht abgedichtet ist.

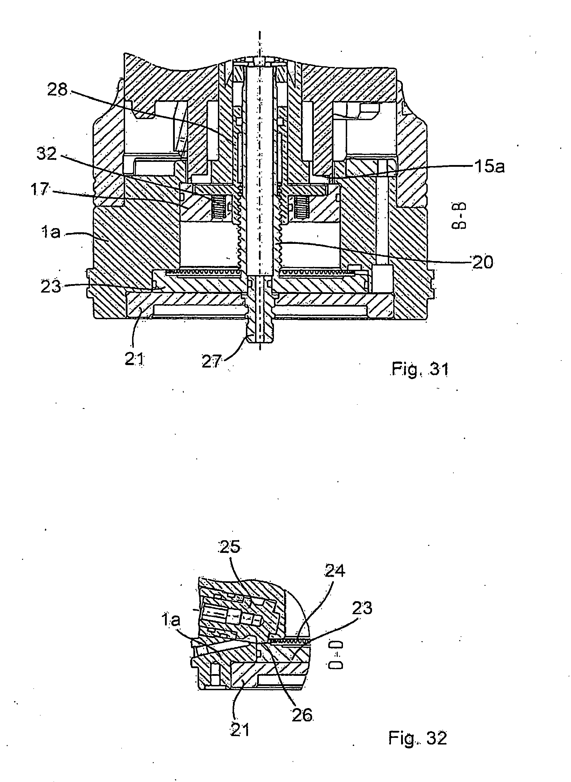

Der Gewindebolzen 20 trägt an seinem unteren Endbereich einen Zahnkranz 23, der radial nach außen abragt und an seiner vorderen Stirnfläche eine Stirnverzahnung 24 trägt. Wie insbesondere in Figur 32 gezeigt ist, ist in dem Grundkörper 1 eine Betätigungsöffnung vorgesehen, in welche ein Betätigungselement 25 eingesetzt und drehbar gehalten ist. Das Betätigungselement 25 trägt an seinem in den Grundkörper 1 ragenden Ende eine Verzahnung 26, welche mit der Stirnverzahnung 24 des Zahnkranzes 23 in Eingriff steht, so dass eine Drehung des Betätigungselements 25 um seine Achse in eine Drehbewegung des Zahnkranzes 23 und damit des Gewindebolzens 20 und die Längsachse X umgesetzt wird. Die Drehbewegung des Gewindebolzens 20 führt wiederum zu einer axialen Verstellung der Zwischenachse 28. Wenn die Zwischenachse 28 nach vorne verstellt wird, führt dies auch zu einer gleichzeitigen Verschiebung des Spannkolbens 3 nach vorne, so dass der Flansch der Zwischenachse 28 an dem Absatz 15a der Streben 15 in Anlage kommt und diese mitnimmt. Mit dem Spannkolben 3 wird auch das Verbindungselement 17 nach vorne bewegt.

Der Stellantrieb umfasst ferner mehrere Druckfederelemente 32, die sich zwischen dem Verbindungselement 17 und der Zwischenachse 28 abstützen. In der dargestellten Ausführungsform sind die Druckfederelemente 32 in entsprechenden Bohrungen des Verbindungselements 17 positioniert und stützen sich an ihrem oberen Endbereich an einem an der Zwischenachse 28 vorgesehenen Anlageflansch ab. Die Druckfederelemente 32 bewirken, dass das Verbindungselement 17 nach hinten gedrückt wird. Dabei wird der Verbindungsweg nach hinten begrenzt durch einen Absatz 15a, der am Spannkolben 3 vorgesehenen Streben 15, welche die entsprechenden axialen Durchgangsöffnungen 16 in dem hinteren Grundkörperelement 1b durchgreifen. Diese sind in Figur 31 erkennbar.

Der an der Rückseite des Verbindungselements 17 vorgesehene Bereich der Ausnehmung 18 ist als ein Druckraum 34 ausgebildet, welcher über eine Druckleitung 34a von außen mit einem Druck beaufschlagbar ist.

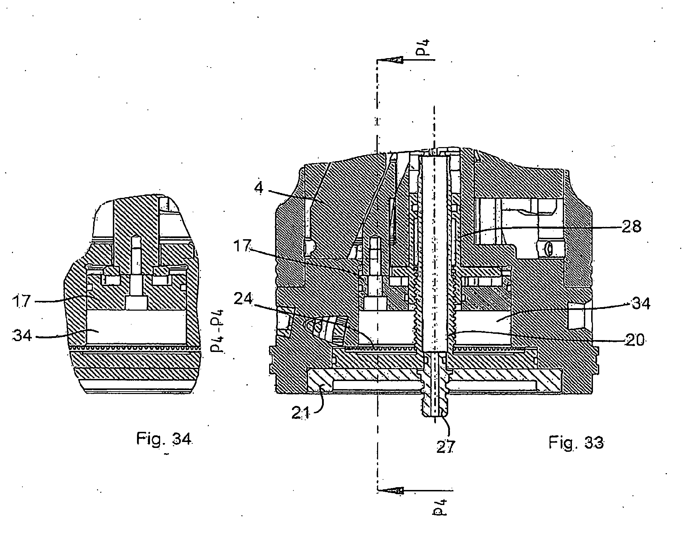

In der Figur 33 ist die Spanneinrichtung in einer Ausgangsstellung dargestellt, in welcher die Zwischenachse 28 in ihre vorderste Stellung gefahren und der Druckraum 34 drucklos ist. Entsprechend wird das Verbindungselement 17 durch die Kraft der Druckfederelemente 32 nach unten gedrückt. Dabei wird der Verstellweg beschränkt, da die Absätze 15a der Streben 15 an dem Anlageflansch in der Zwischenachse 28 in Anlage kommen. Wenn der Druckraum 34 nun mit Druckluft beaufschlagt wird, wird das Verbindungselement 17 und damit der Spannkolben 3 entgegen der Rückstellkraft der Druckfederelemente 32 aus der in Figur 33 dargestellten Stellung in die in Figur 31 dargestellte Stellung angehoben, wodurch die Spannbacken 4 leicht geöffnet werden, um ein Bauteil einsetzen zu können. Wird anschließend der Druckraum 34 wieder entlastet, wird das Verbindungselement 17 durch die Rückstellkraft der Druckfederelemente 32 nach unten gedrückt, so dass die Spannbacken 4 geschlossen werden, um ein zwischen ihnen positioniertes Bauteil zu spannen.

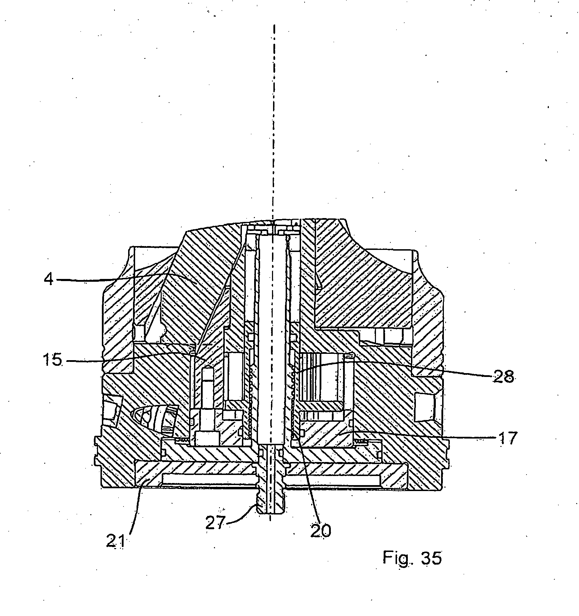

Wenn kleinere Bauteile gespannt werden sollen, wird die Position der Zwischenachse 28 verstellt, indem der Gewindebolzen 20 über das Betätigungselement 25 verdreht wird. In der Figur 35 ist das Verbindungselement 17 in der untersten Position gezeigt.

## Patentansprüche

1. Spann- oder Greifeinrichtung mit einem Grundkörper (1) aus einem formsteifen Material, der eine Längsachse (X) definiert, mehreren Spannbacken (4), die an dem Grundkörper (1) radial in Bezug auf die Längsachse (X) bewegbar gehalten sind, und einem zumindest teilweise hohl ausgebildeten Spannkolben (3), welcher an dem Grundkörper (1) axial zwischen einer hinteren und einer vorderen Endstellung bewegbar gehalten ist und die Spannbacken (4) zumindest teilweise umgreift, wobei die Spannbacken (4) und der Spannkolben (3) miteinander in der Weise gekoppelt sind, dass eine Axialbewegung des Spannkolbens (3) in eine Radialbewegung der Spannbacken (4) umgesetzt wird, und wobei ein Stellantrieb zur Betätigung des Spannkolbens (3) vorgesehen ist, **dadurch gekennzeichnet, dass** der Grundkörper (1) an seiner Rückseite eine zentrale Ausnehmung (18) aufweist, in welcher ein mit dem Spannkolben (3) verbundenes, ringförmiges Verbindungselement (17) axial geführt ist, dass in dem Grundkörper (1) eine Achse (27) gehalten ist, dass an der Achse (27) eine Zwischenachse (28) axial verstellbar gehalten ist, welche das Verbindungselement (17) axial durchgreift, dass Federelemente, insbesondere Druckfederelemente (32) vorgesehen sind, die sich zwischen dem Verbindungselement (17) und der Zwischenachse (28) abstützen, um das Verbindungselement (17) nach hinten zu drücken, wobei Anschlagmittel (33) vorgesehen sind, welche einen axialen Verstellweg des Verbindungselements (17) nach hinten hin begrenzen, und dass das hintere Ende des Grundkörpers (1) verschlossen ist, so dass zwischen dem Verbindungselement (17) und dem Gehäusekörper (1) an der Rückseite des Verbindungselements (17) in der zentralen Ausnehmung (18) ein Druckraum (34) ausgebildet wird, welcher über eine Druckleitung von außen mit einem Druck beaufschlagbar ist, um das Verbindungselement (17) entgegen der Rückstellkraft der Federelemente (32) nach vorne zu bewegen.

2. Spann- oder Greifeinrichtung nach Anspruch 1, **dadurch gekennzeichnet, dass** die Zwischenachse (28) an ihrem vorderen Endbereich ein Außengewinde (29) aufweist, das in eine korrespondierende Gewindebohrung (30) eines Führungszapfens (7) eingeschraubt ist, so dass die Zwischenachse (28) durch Verdrehen um ihre Längsachse axial verstellt werden kann.

3. Spann- oder Greifeinrichtung nach Anspruch 2, **dadurch gekennzeichnet, dass** die Zwischenachse (28) ein an der Achse (27) axial verschiebbar, aber drehfest gehaltenes Hülsenelement (28a) und einen an dem freien Ende des Hülsenelementes (28) fixierten Gewindekopf (28b), welcher ein mit der Gewindebohrung (30) des Führungszapfens (7) in Eingriff stehendes Außengewinde aufweist, umfasst und/oder an einem hinteren Endbereich der Zwischenachse (28) die Anschlagmittel (33) insbesondere in Form eines radial vorstehenden Absatzes ausgebildet sind.

4. Spann- oder Greifeinrichtung nach einem der vorherigen Ansprüche, **dadurch gekennzeichnet, dass** eine Zwischenhülse (31) auf die Zwischenachse (28) aufgeschoben ist und an ihrem vorderen Endbereich an einem Axialanschlag der Zwischenachse (28) anliegt, wobei sich die Druckfederelemente (32) zwischen dem Verbindungselement (17) und der Zwischenhülse (31) abstützen und/oder dass ein Ringspalt zwischen dem Verbindungselement (17) und der Zwischenachse (28) abgedichtet ist.

5. Spann- oder Greifeinrichtung nach Anspruch 2, **dadurch gekennzeichnet, dass** in der vorderen Stirnfläche der Zwischenachse (28), insbesondere eines Gewindekopfes (28b) der Zwischenachse (28), Eingriffsmittel für ein Drehwerkzeug ausgebildet sind, über welche die Zwischenachse (28) gedreht und so axial gegenüber dem Grundkörper (1) verstellt werden kann.

6. Spann- oder Greifeinrichtung nach Anspruch 1, **dadurch gekennzeichnet, dass** ein Gewindebolzen (20) an der Achse (27) axialfest, aber um seine Längsachse drehbar gehalten ist und die Zwischenachse (28) auf den Gewindebolzen (20) aufgeschraubt ist, so dass die Zwischenachse (28) durch Verdrehen des Gewindebolzens (20) axial verstellbar ist, und dass Antriebsmittel vorgesehen sind, um den Gewindebolzen (20) zu drehen,
wobei insbesondere an dem Gewindebolzen (20) ein Zahnkranz (23) drehfest gehalten ist, der von außen insbesondere durch eine Betätigungsöffnung in dem Grundkörper (1) mittels eines Betätigungselements (25) in Drehung versetzbar ist und bevorzugt der Zahnkranz (23) eine Stirnverzahnung (24) aufweist.

7. Spann- oder Greifeinrichtung mit einem Grundkörper (1) aus einem formsteifen Material, der eine Längsachse (X) definiert, mehreren Spannbacken (4), die an dem Grundkörper (1) radial in Bezug auf die Längsachse (X) bewegbar gehalten sind, und einem zumindest teilweise hohl ausgebildeten Spannkolben (3), welcher an dem Grundkörper (1) axial zwischen einer hinteren und einer vorderen Endstellung bewegbar gehalten ist und die Spannbacken (4) zumindest teilweise umgreift, wobei die Spannbacken (4) und der Spannkolben (3) miteinander in der Weise gekoppelt sind, dass eine Axialbewegung des Spannkolbens (3) in eine Radialbewegung der Spannbacken (4) umgesetzt wird, und wobei ein Stellantrieb zur Betätigung des Spannkolbens (3) vorgesehen ist, **dadurch gekennzeichnet, dass** der Grundkörper (1) an seiner Rückseite eine zentrale Ausnehmung (18) aufweist, in welcher eine mit dem Kolben verbundenes Verbindungselement (17) gehalten, insbesondere axial geführt ist, und das Verbindungselement (17) ein Innengewinde aufweist, in welches ein Gewindebolzen (20) eingeschraubt ist, der in dem Grundkörper (1) drehbar, aber axialfest gehalten ist, und dass Antriebsmittel vorgesehen sind, um den Gewindebolzen (20) zu drehen.

8. Spann- oder Greifeinrichtung nach Anspruch 7, **dadurch gekennzeichnet, dass** an dem Gewindebolzen (20) ein Zahnkranz (23) drehfest gehalten ist, der von außen insbesondere durch eine Betätigungsöffnung in dem Grundkörper (1), mittels eines Betätigungselements (25) in Drehung versetzbar ist, wobei insbesondere der Zahnkranz (23) eine Stirnverzahnung (24) aufweist.

9. Spann- oder Greifeinrichtung nach einem der vorherigen Ansprüche, **dadurch gekennzeichnet, dass** der Spannkolben (3) an seinem rückseitigen Ende mehrere sich axial erstreckende Streben (15) trägt, welche entsprechende axiale Durchgangsöffnungen (5) in dem Grundkörper (1) durchgreifen und an ihren freien Enden durch das Verbindungselement (17) miteinander verbunden sind, wobei insbesondere die Streben (15) in die Ausnehmung (18) des Grundkörpers (1) münden, wobei die Ausnehmung (18) insbesondere eine derartige Tiefe besitzt, dass in der hinteren Position des Spannkolbens (3) die freien Enden der Streben bzw. das die freien Enden der Streben (15) verbindende Verbindungselement (17) noch innerhalb der Ausnehmung (18) liegen.

10. Spann- oder Greifeinrichtung nach einem der vorherigen Ansprüche, **dadurch gekennzeichnet, dass** in der vorderen Stirnfläche des Grundkörpers (1) eine zentrale Aufnahme (2) ausgebildet ist, in welcher die Spannbacken (4) und der Spannkolben (3) angeordnet sind.

11. Spann- oder Greifeinrichtung nach einem der vorherigen Ansprüche, **dadurch gekennzeichnet, dass** von dem Grundkörper (1) ein koaxial zur Längsachse (X) positionierter Führungszapfen (7) abragt, an dessen Außenseite der Spannkolben (3) axial bewegbar geführt ist, wobei insbesondere der Grundkörper (1) axial unterteilt ist und ein die Aufnahme (2) definierendes Grundkörperelement (1a) und ein den Führungszapfen (7) tragendes Grundkörperelement (1b) aufweist, wobei die beiden Grundkörperelemente (1a, 1b) durch korrespondierende Zentriermittel (6) zueinander ausgerichtet und miteinander lösbar verbunden, insbesondere verschraubt sind.

12. Spann- oder Greifeinrichtung nach Anspruch 11, **dadurch gekennzeichnet, dass** der Führungszapfen (7) hülsenartig ausgebildet ist und an seinem vorderen Endbereich aus dem Grundkörper (1) ragt, wobei in der Wandung des Führungszapfens (7) Längsschlitze (9) vorgesehen sind, welche von den Spannbacken (3) durchgriffen werden, wobei insbesondere die Längsschlitze (9) zur vorderen Stirnseite des Führungszapfens (7) offen sind.

13. Spann- oder Greifeinrichtung nach einem der vorherigen Ansprüche, **dadurch gekennzeichnet, dass** der Spannkolben (3) axiale Durchgangsöffnungen (5) aufweist, welche von den Spannbacken (4) durchgriffen werden, so dass diese nach vorne aus dem Spannkolben (3) ragen, und in denen die Spannbacken (4) insbesondere seitlich geführt sind.

14. Spann- oder Greifeinrichtung nach Anspruch 13, **dadurch gekennzeichnet, dass** die Spannbacken (4) jeweils an einer Seitenfläche eine Führungsnut (10) aufweisen, in welche eine zugeordnete Führungsnase (11) des Spannkolbens (3) eingreift, wobei jede Führungsnase (11) mit Führungsflächen (10a, 10b) der zugeordneten Führungsnut (10) zusammenwirkt, um Axialbewegungen des Spannkolbens (3) in Radialbewegungen der Spannbacken (4) umzusetzen, wobei insbesondere Führungsnuten (10) jeweils nur an einer Seitenfläche der Spannbacken (4), und zwar insbesondere an derjenigen Seitenfläche, welche in der Draufsicht in Richtung des entgegengesetzten Uhrzeigersinns weist, ausgebildet sind.

15. Spann- oder Greifeinrichtung nach Anspruch 14, **dadurch gekennzeichnet, dass** jede Führungsnut eine radial innere Führungsfläche (10a) und eine radial äußere Führungsfläche (10b) aufweist und die zugeordnete Führungsnase (11) mit beiden Führungsflächen (10a, 10b) in Kontakt steht, so dass eine nach vorne gerichtete Axialbewegung des Spannkolbens (3) durch ein Zusammenwirken der Außenfläche (11b) der Führungsnase (11) mit der radial äußeren Führungsfläche (10b) der Führungsnut (10) in eine radial nach außen gerichtete Bewegung der Spannbacken (4) umgesetzt wird und eine nach hinten gerichtete Axialbewegung des Spannkolbens (3) durch ein Zusammenwirken der Innenfläche (11a) der Führungsnase (11) mit der radial inneren Führungsfläche (10a) in eine radial nach innen gerichtete Spannbewegung der Spannbacken (4) umgesetzt wird, wobei insbesondere die Führungsnasen (11) am vorderen Endbereich des Spannkolbens (3) ausgebildet sind.

16. Spann- oder Greifeinrichtung nach einem der vorherigen Ansprüche, **dadurch gekennzeichnet, dass** die Spannbacken (4) mit ihrer hinteren Stirnfläche flächig an einer senkrecht zur Längsachse (X) liegenden Kontaktfläche des Grundkörpers (1), insbesondere eines den Führungszapfen (7) tragenden Grundkörperelements (1b), anliegen.

17. Spann- oder Greifeinrichtung nach Anspruch 16, **dadurch gekennzeichnet, dass** am hinteren Ende der Spannbacken (3) jeweils eine radiale Nut (12) in einer Seitenfläche der Spannbacken (3) ausgebildet ist, in welche ein Haltesteg (13) eingreift, um die Spannbacke (3) axial an der Kontaktfläche zu sichern,
wobei insbesondere die radialen Nuten (12) jeweils an derselben Seitenfläche der Spannbacken (4) wie die Führungsnuten (10) ausgebildet sind und/oder
wobei insbesondere die Haltestege (13) an Halteelementen (14) ausgebildet sind, welche an dem Grundkörper (1) und insbesondere dem den Führungszapfen (7) tragenden hinteren Grundkörperelement (1b) festgeschraubt sind.

## Claims

1. Chucking or gripping device with a base body (1) made of rigid material, that defines a longitudinal axis (X), several clamping jaws (4) which are moveably held on the base body (1) radially with regard to the longitudinal axis (X), and a tensioning piston (3), which is movably held on the base body (1) axially between a rear and a front end position and encompasses the clamping jaws (4) at least partially, wherein the clamping jaws (4) and the tensioning piston (3) are coupled with one another in such a way, that an axial movement of the tensioning piston (3) is converted into a radial movement of the clamping jaws (4), and wherein an actuator is provided for operating the tensioning piston (3), **characterized in that** the base body (1) has at its rear side a central recess (18), in which is axially guided a ring shaped connecting element (17) that is connected with the tensioning piston (3), that a shaft (27) is held in the base body (1), that an intermediate-shaft is axially displaceably held on the shaft (27), which axially passes through the connecting element (17), that spring elements, in particular compressions spring elements (32) are provided, which are retained between the connecting element (17) and the intermediate shaft (28) in order to urge the connecting element (17) to the rear side, wherein stopper means (33) are provided limiting the axial displacement path of the connecting element (17) to the rear side, and that the rear end of the base body (1) is closed, so that a pressure chamber (34) is formed between the connecting element (17) and the base body (1) on the rear side of the connecting element (17) in the central recess (18), which can be pressurized from outside via a pressure line in order to move the connecting element (17) to the front side against the restoring force of the spring elements (32).

2. Chucking or gripping device according to claim 1, **characterized in that** the intermediate shaft (28) has at its front end section a male thread (29), which is screwed into a corresponding threaded bove (30) of a guiding pin, so that the intermediate shaft (28) can be displaced axially by turning around its longitudinal axis.

3. Chucking or gripping device according to claim 2, **characterized in that** the intermediate shaft (28) comprises a sleeve element (28) held on the shaft (27) in an axially displaceable but torque proof manner and a threaded head (28b) fixed to the free end of the sleeve element (28) which has a male thread in engagement with the threaded bore (30) of the guiding pin (7) and/or the stopper means (33) are formed on the rear end section of the intermediate shaft (28) in particular in the form of a radially protruding shoulder.

4. Chucking or gripping device according to any of the preceding claims, **characterized in that** an intermediate sleeve (31) is slided onto the intermediate shaft (28) and rests at its front end section on an axial stopper of the intermediate shaft (28), wherein the compression spring elements (32) are retained between the connecting element (17) and the intermediate sleeve (31) and/or that an annular gap between the connecting element (17) and the intermediate shaft (28) is sealed off.

5. Chucking or gripping device according to claim 2, **characterized in that** in the front face of the intermediate shaft (28), in particular of a threaded head (28b) of the intermediate shaft (28), engagement means for a turning tool are formed, via which the intermediate shaft (28) can be turned and thus axially displaced with regard to the base body (1).

6. Chucking or gripping device according to claim 1, **characterized in that** a threaded bolt (20) is held on the shaft (27) in an axially fixed position but can be turned around its longitudinal axis and the intermediate shaft (28) is screwed onto the threaded bolt (20), so that the intermediate shaft (28) can be axially displaced by turning the threaded bolt (20), and that drive means are provided for turning the threaded bolt (20),
wherein in particular a gear ring (23) is in a torque proof manner held on the threaded bolt (20), that can be turned by means of an actuating element (25) from outside in particular through an actuating opening in the base body (1) and preferably the gear ring (23) has a spur gearing.

7. Chucking or gripping device with a base body (1) made of rigid material, that defines a longitudinal axis (X), several clamping jaws (4) which are moveably held on the base body (1) radially with regard to the longitudinal axis (X), and a tensioning piston (3), which is movably held on the base body (1) axially between a rear and a front end position and encompasses the clamping jaws (4) at least partially, wherein the clamping jaws (4) and the tensioning piston (3) are coupled with one another in such a way, that an axial movement of the tensioning piston (3) is converted into a radial movement of the clamping jaws (4), and wherein an actuator is provided for operating the tensioning piston (3), **characterized in that** the base body (1) has at its rear side a central recess (18), in which a connecting element (17) is held, in particular axially guided, and the connecting element (17) has a threaded bore, into which threaded bolt (20) is screwed, which is held on the base body (1) in an axially fixed position but can be turned, and that drive means are provided for turning the threaded bolt (20).

8. Chucking or gripping device according to claim 7, **characterized in that** a gear ring (23) held on the threaded bolt (20) in a torque proof manner, that can be turned by means of an actuating element (25) from outside in particular through an actuating opening in the base body, wherein in particular gear ring (23) has a spur ring.

9. Chucking or gripping device according to any preceding claim, **characterized in that** the tensioning piston (3) carries on its rear end several axially extending struts (15), that pass through corresponding axial through openings (5) in the base body and are connected with each other on their free ends by the connecting element (17), wherein in particular the struts (15) lead into the recess (18) of the base body, wherein the recess (18) in particular has such a depth, that in the rear position of the tensioning piston (3) the free ends of the struts respectively the connecting element (17) connecting the free ends of the struts (15) are still positioned within the recess (18).

10. Chucking or gripping device according to any of the preceding claims, **characterized in that** a central reception (2) is formed in the front face of the base body (1), in which the clamping jaws (4) and the tensioning piston (3) are positioned.

11. Chucking or gripping device according to any of the preceding claims, **characterized in that** a guiding pin (7) positioned coaxially to the longitudinal axis (X) extends from the base body (1) on the external side of which the tensioning piston (3) is axially movably guided, wherein in particular the base body (1) is axially divided and comprises a base body element (1a) defining the reception (2) and a base body element (1b) carrying the guiding pin (7), wherein the two base body elements (1a, 1b) are aligned with regard to another and releasable connected with each other, in particular secured together, by corresponding centering means.

12. Chucking or gripping device according to claim 11, **characterized in that** the guiding pin (7) is formed as a sleeve and protrudes with its front end section out of the base body (1), wherein longitudinal slots (9) are provided in the wall of the guiding pin (7), through which the tensioning piston (3) passes, wherein in particular the longitudinal slots (9) are open to the front face of the guiding pin (7).

13. Chucking or gripping device according to any of the preceding claims, **characterized in that** the tensioning piston (3) has axial through openings (5), through which the clamping jaws (4) pass, so that they protrude to the front out of the tensioning piston (3) and in which the clamping jaws (4) are guiding in particular on their sides.

14. Chucking or gripping device according claim 12, **characterized in that** the clamping jaws (4) each have on one side face a guide groove (10), into which invades a corresponding guide nose (11) of the tensioning piston (3), wherein each guide nose (11) coacts with guide faces (10a, 10b) of the corresponding guide groove (10) in order to convert axial movements of the tensioning piston (3) into a radial movements of the clamping jaws (4), wherein in particular guide grooves (10) are provided only on one side face of the clamping jaws (4), namely in particular on the side face, which in the plan view is directed against the clockwise direction.

15. Chucking or gripping device according to claim 14, **characterized in that** each guide groove comprises a radially inner guide face (10a) and a radially outer guide face (10b) and the guide nose (11) associated thereto is in contact with both guide faces (10a, 10b), so that an axial movement of the tensioning piston (3) to the front is concerted into outwardly directed movements of the clamping jaws (4) by coaction of the outer face (1b) of the guide nose (11) with the radially outer guide face (10b) of the guide groove (10) and an axial movement of the tensioning piston (3) to the rear is converted in radially inwardly directed clamping movements of the clamping jaws (4) by coaction of the inner face (11 a) of the guide nose (11) with the radially inner guide face (10a), wherein in particular the guide noses (11) are provided on the front end section of the tensioning piston (3).

16. Chucking or gripping device according to any of the preceding claims, **characterized in that** the clamping jaws (4) rest with their rear face on a contact face of the base body (1) which is directed vertically to the longitudinal axis (X) in a planar fashion, in particular on a base body element (1b) carrying the guide pin (7).

17. Chucking or gripping device according to claim 16, **characterized in that** on the rear end of each clamping jaws (3) a radial groove (12) is formed in a side face of the clamping jaws (3), into which is a holding ribs (13) engages, in order to secure the clamping jaws (3) axially on the contact face, wherein in particular the radial groves (12) are each formed on the same side face of the clamping jaws (4) as the guide grooves (10) and/or wherein in particular the holding ribs (13) are formed on holding elements (14), which are secured to the base body (1) and in particular to the base body element (1b) carrying the guide pin (7).

## Revendications

1. Dispositif de serrage ou de préhension avec un châssis (1) composé d' un matériau rigide définissant un axe longitudinal (X), plusieurs mâchoires de serrage (4) montées sur le châssis (1) et mobiles en directement radiale par rapport à l'axe longitudinal (X), et un piston de serrage (3) au moins partiellement creux monté mobile axialement sur le châssis (1) entre une position de fin de course arrière et une position de fin de course avant et enveloppant au moins partiellement les mâchoires de serrage (4), les mâchoires de serrage (4) et le piston de serrage (3) étant couplés de façon à donner lieu à un mouvement axial du piston de serrage (3) lors du mouvement radial des mâchoires de serrage (4), et une commande d'entrainement étant prévue pour l'actionnement du piston de serrage (3), **caractérisé en ce que** le dos du châssis (1) présente une exclusion (18) dans laquelle est inséré axialement un élément de raccordement annulaire (17) relié au piston de serrage (3), que le châssis (1) comporte un axe (27), que l'axe (27) comporte un axe intermédiaire (28) axialement mobile qu' enveloppe axialement l'élément de raccordement (17), que sont prévus des éléments de ressort, notamment des éléments de ressort à pression (32), qui viennent s' appuyer entre l'élément de raccordement (17) et l'axe intermédiaire (28) afin de pousser l'élément de raccordement (17) vers l'arrière, des moyens d' arrimage (33) étant en place pour limiter le déplacement axial de l'élément de raccordement (17) vers l'arrière, et que l'extrémité arrière du châssis (1) est refermée de sorte que soit formée, dans l'exclusion centrale (18), entre l'élément de raccordement (17) et le boîtier (1) à l'arrière de l'élément de raccordement (17), une chambre de pression (34) prouvant être ouverte de l'extérieur sous l'action d' une pression transmise par une conduite de pression afin de déplacer l'élément de raccordement (17) vers l'avant contre la force de rappel des éléments à ressort (32).

2. Dispositif de serrage ou de préhension selon la revendication 1, **caractérisé en ce que** l'extrémité avant de l'axe intermédiaire (28) présente un filetage extérieur (29) vissé dans un perçage taraudé (30) correspondant du tenon de guidage (7), de sorte que l'axe intermédiaire (28) puisse être déplacé axialement le long de son axe longitudinal par pivotement.

3. Dispositif de serrage ou de préhension selon la revendication 2, **caractérisé en ce que** l'axe intermédiaire (28) comprend un élément de manchon (28a) monté de façon non rotative sur l'axe (27) sur lequel il peut être déplacé axialement, ainsi qu'une tête de taraudage (28b) fixée sur l'extrémité libre de l'élément de manchon (28) et présentant un filetage extérieur engagé avec le perçage taraudé (30) du tenon de guidage (7), et/ou qu'une section arrière de l'axe intermédiaire (28) comporte les moyens d' arrimage (33), notamment sous la forme d' un épaulement radialement en saillie.

4. Dispositif de serrage ou de préhension selon l'une des revendications précédentes, **caractérisé en ce qu'** un manchon intermédiaire (31) est enfilé sur l' axe intermédiaire (28) et touche, de sa section avant, une butée axiale de l'axe intermédiaire (28), les éléments de ressort à pression (32) s'appuyant entre l'élément de raccordement (17) et le manchon intermédiaire (31) et/ou qu' est colmaté un espace annulaire entre l'élément de raccordement (17) et l'axe intermédiaire (18).

5. Dispositif de serrage ou de préhension selon la revendication 2, **caractérisé en ce que** sont disposés, sur le front avant de l'axe intermédiaire (28), ou plus précisément d' une tête de taraudage (28b) de l'axe intermédiaire (28), des moyens d' engrènement pour un outil rotatif permettant de faire pivoter l'axe intermédiaire (28) dans le but de le déplacer axialement par rapport au châssis (1).

6. Dispositif de serrage ou de préhension selon la revendication 2, **caractérisé en ce qu'** un boulon fileté (20) est fixé à l'axe (27) de façon amovible dans la direction axial, mais rotative le long de l'axe longitudinal, et que l'axe intermédiaire (28) est vissé au boulon fileté (20) de sorte que l'axe intermédiaire (28) peut être décalé en faisant pivoter le boulon fileté (20), et que des moyens d' entraînement sont en place pour faire pivoter le boulon fileté (20),
sur le boulon fileté (20) étant notamment montée non pivotante une couronne dentée (23) qui est notamment mise en rotation de l'extérieur au moyen d' un élément d' actionnement (25) par une ouverture d' actionnement dans le châssis (1), et la couronne dentée (23) présentant idéalement une denture frontale (24).

7. Dispositif de serrage ou de préhension avec un châssis (1) composé d'un matériau rigide définissant un axe longitudinal (X), plusieurs mâchoires de serrage (4) montées sur le châssis (1) et mobiles en directement radiale par rapport à l'axe longitudinal (X), et un piston de serrage (3) au moins partiellement creux monté mobile axialement sur le châssis (1) entre une position de fin de course arrière et une position de fin de course avant et enveloppant au moins partiellement les mâchoires de serrage (4), les mâchoires de serrage (4) et le piston de serrage (3) étant couplés de façon à donner lieu à un mouvement axial du piston de serrage (3) lors du mouvement radial des mâchoires de serrage (4), et une commande d'entraînement étant prévue pour l'actionnement du piston de serrage (3), **caractérisé en ce que** le dos du châssis (1) présente une exclusion(18) dans laquelle est maintenu, ou plus précisément inséré axialement, un élément de raccordement annulaire (17) relié au piston, et que l'élément de raccordement (17) présente un filetage interne dans lequel est vissé un boulon fileté (20) prouvant être pivoté dans le châssis (1) mais étant autrement immobile dans la direction axiale, et que des moyens d' entraînement sont en place pour faire pivoter le boulon fileté (20).

8. Dispositif de serrage ou de préhension selon la revendication 7, **caractérisé en ce que**, sur le boulon fileté (20) est montée non pivotante une couronne dentée (23) qui est notamment mise en rotation de l'extérieur au moyen d' un élément d' actionnement (25) par une ouverture d' actionnement dans le châssis (1), la couronne dentée (23) présentant notamment une denture frontale (24).

9. Dispositif de serrage ou de préhension selon l'une des revendications précédentes, **caractérisé en ce que** l'extrémité arrière du piston de serrage (3) présente plusieurs entretoises (15) qui s'étendent en direction axiale, traversant le châssis (1) par des ouvertures de passage (5) axiales correspondantes et étant reliées entre elles par leurs extrémités libres au moyen de l'élément de raccordement (17), les entretoises (15) aboutissant dans l'exclusion (18) du châssis (1), la profondeur de l'exclusion (18) étant telle que dans la position arrière du piston de serrage (3), les extrémités libres des entretoises ou l'élément de raccordement (17) reliant lesdites entretoises (15) sont quand même contenus dans l'exclusion (18).

10. Dispositif de serrage ou de préhension selon l'une des revendications précédentes, **caractérisé en ce que** le front du châssis (1) présente un logement central (2) dans lequel les mâchoires de serrage (4) et le piston de serrage (3) sont disposés.

11. Dispositif de serrage ou de préhension selon l'une des revendications précédentes, **caractérisé en ce que** du châssis (1) saillit un tourillon de guidage (7) disposé coaxialement à l'axe longitudinal (X) et dans le côté externe duquel le piston de serrage (3) est monté de façon mobile dans le sens axial, le châssis (1) étant notamment subdivisé axialement et présentant un élément de châssis (1a) définissant le logement (2) ainsi qu'un élément de châssis (1 b) portant le tourillon de guidage (7), les deux éléments de châssis (1a, 1b) étant reliés, ou plus précisément vissés, et raccordés entre eux de façon amovible par des moyens de centrage (6).

12. Dispositif de serrage ou de préhension selon la revendication 11, **caractérisé en ce que** le tourillon de guidage (7) a une forme de manchon et que son extrémité avant est en saillie par rapport au châssis (1), la paroi du tourillon de guidage (7) présentant des fentes longitudinales (9) travées par les mâchoires de serrage (3), les fentes longitudinales (9) étant notamment ouvertes sur le front avant du tourillon de guidage (7).

13. Dispositif de serrage ou de préhension selon l'une des revendications précédentes, **caractérisé en ce que** le piston de serrage (3) présente des ouvertures de passage (5) traversées par les mâchoires de serrage (4) de sorte que ces dernières saillissent du piston de serrage (3) et dans lesquelles les mâchoires de serrage (4) sont notamment insérées latéralement.

14. Dispositif de serrage ou de préhension selon la revendication 11, **caractérisé en ce que** les mâchoires de serrage (4) présentent chacune sur un côté une rainure de guidage (10) dans laquelle vient s'engager un ergot de guidage (11) du piston de serrage (3) qui lui est assigné, chaque ergot de guidage (11) interagissant avec les surfaces de guidage (10a, 10b) de la rainure de guidage (10) qui lui est assignée afin de transposer des mouvements axiaux du piston de serrage (3) en mouvement radiaux des mâchoires de serrage (4), les rainures de guidage (10) étant formées dans une paroi latérale des mâchoires de serrage (4), ou plus précisément dans la paroi latérale qui, vue du dessus, est orientée dans la direction du sens horaire opposé.

15. Dispositif de serrage ou de préhension selon la revendication 14, **caractérisé en ce que** chaque rainure de guidage présente une surface de guidage (10a) radialement interne ainsi qu' une surface de guidage (10b) radialement externe et que l'ergot de guidage (11) assigné est en contact avec les deux surfaces de guidage (10a, 10b) de sorte qu' un mouvement axial vers l'avant du piston de serrage (3) est transposé en un mouvement radial vers l'extérieur des mâchoires de serrage (4) par l'interaction de la surface extérieure (11b) de l'ergot de guidage (11) avec la surface de guidage (10b) de la rainure de guidage (10), et qu' un mouvement axial vers l'arrière du piston de serrage (3) est transposé en un mouvement radial vers l'intérieur des mâchoires de serrage (4) par l'interaction de la surface intérieure (11a) de l'ergot de guidage (11) avec la surface de guidage intérieure (10a), les ergots de guidage (11) étant notamment configurés sur l'extrémité avant du piston de serrage (3).

16. Dispositif de serrage ou de préhension selon l'une des revendications précédentes, **caractérisé en ce que** la surface frontale arrière des mâchoires de serrage (4) touche à plat à une surface de contact du châssis (1), plus précisément de l'élément de châssis (1b) portant le tenon de guidage (7), verticale à l'axe longitudinal (X).

17. Dispositif de serrage ou de préhension selon la revendication 16, **caractérisé en ce qu'**une rainure radiale (12) est pratiquée à l'extrémité arrière de la mâchoire de serrage (3) dans chaque surface latérale de la mâchoire de serrage (3), dans laquelle une entretoise de maintien (13) vient s'engager pour immobiliser la mâchoire de serrage (3) axialement à la surface de contact,
les rainures radiales (12) étant chacune réalisées dans la même paroi latérale des mâchoires de serrage (4), comme les rainures de guidage (10), et/ou
les entretoises de maintien (13) étant notamment disposés sur des éléments de maintien (14) solidement vissés au châssis (1), et notamment à l'élément de châssis (1 b) supportant le tenon de guidage (7).
